# EUROPEAN PATENT SPECIFICATION

(11) **EP 3 684 183 B1**
(45) Date of publication and mention of the grant of the patent: **10.11.2021**
(21) Application number: 18773158.3
(22) Date of filing: 18.09.2018
(51) Int. Cl.: A01N 43/54, C07D 401/04, C07D 401/14, C07D 403/04, C07D 239/42

(54) **HERBICIDALLY ACTIVE PYRIDYL-/PYRIMIDYL-PYRIMIDINE DERIVATIVES**
HERBIZIDE PYRIDYL-/PYRIMIDYL-PYRIMIDIN-DERIVATE
DÉRIVÉS DE PYRIDYLE-/ PYRIMIDYLE-PYRIMIDINE HERBICIDES

(30) Priority: 22.09.2017 GB 201715323
(43) Date of publication of application: 29.07.2020
(73) Proprietor: Syngenta Participations AG, 4058 Basel (CH)
(72) Inventor: WAILES, Jeffrey, Steven, Bracknell Berkshire RG42 6EY (GB); BRIGGS, Emma, Bracknell Berkshire RG42 6EY (GB); CARTER, Neil, Brian, Bracknell Berkshire RG42 6EY (GB); MORRIS, Melloney, Bracknell Berkshire RG42 6EY (GB); TATE, Joseph, Andrew, Bracknell Berkshire RG42 6EY (GB)
(86) International application number: PCT/EP2018/075227
(87) International publication number: WO 2019/057721

(56) References cited:
- EP-A1- 0 902 026
- WO-A1-2017/162522
- WO-A2-2009/138712
- JP-A- 2001 316 376
- CHRISTIAN HARCKEN ET AL: "Identification of Highly Efficacious Glucocorticoid Receptor Agonists with a Potential for Reduced Clinical Bone Side Effects", JOURNAL OF MEDICINAL CHEMISTRY, vol. 57, no. 4, 7 February 2014 (2014-02-07), pages 1583-1598, XP055515866, ISSN: 0022-2623, DOI: 10.1021/jm4019178 cited in the application

## Description

The present invention relates to herbicidally active pyridyl-/pyrimidyl-pyrimidine derivatives, as well as to processes and intermediates used for the preparation of such derivatives. The invention further extends to herbicidal compositions comprising such derivatives, as well as to the use of such compounds and compositions in controlling undesirable plant growth: in particular the use in controlling weeds, in crops of useful plants.

Harcken et al., (2014 J. Med. Chem 57:1583-1598) describe the use of *N*-[4-chloro-2-(3-pyridyl)-pyrimidin-5-yl]-2,2,2-trifluoro-acetamide as an intermediate in the production of glucocorticoid receptor agonists.

Certain pyrido-pyridine and pyrimidino-pyridine derivatives are known from JP2014-208631, where they are stated to have activity as insecticidal agents, and in particular miticidal agents.

The present invention is based on the finding that pyridino-pyrimidine, and pyrimidino-pyrimidine, derivatives of Formula (I) as defined herein, exhibit surprisingly good herbicidal activity. Thus, according to the present invention there is provided a compound of Formula (I) 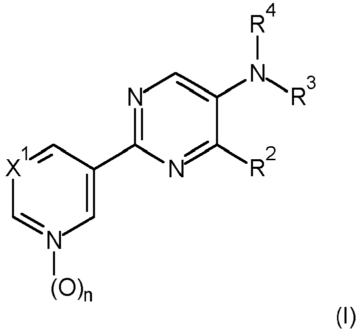 or a salt or N-oxide thereof, wherein,
X¹ is N or CR¹;
R¹ is selected from the group consisting of hydrogen, halogen, cyano, C₁-C₆alkyl, C₃-C₆cycloalkyl, C₂-C₆alkenyl, C₂-C₆alkynyl, C₁-C₆alkoxy, -C(O)OC₁-C₆alkyl, -S(O)ₚC₁-C₆alkyl, NR⁶R⁷, C₁-C₆haloalkoxy and C₁-C₆haloalkyl;
R² is selected from the group consisting of halogen, cyano, nitro, C₁-C₆alkyl, C₁-C₆haloalkyl, C₂-C₆alkenyl, C₂-C₆alkynyl, C₃-C₆cycloalkyl, -C(O)OC₁-C₆alkyl, -S(O)ₚ(C₁-C₆alkyl), C₁-C₆alkoxy and C₁-C₆haloalkoxy;
R³ is -C(O)R⁹;
R⁴ is selected from the group consisting of hydrogen, C₁-C₆alkyl, C₁-C₆haloalkyl, C₃-C₆alkenyl, C₃-C₆alkynyl, CᵣalkoxyCₛalkyl, - CᵣalkoxyCₛhaloalkyl, CᵣalkoxyCₛthioalkyl, - C(O)R⁹ and -(CR^{a}R^{b})_{q}R⁵;
each R^{a} is independently hydrogen or C₁-C₂ alkyl;
each R^{b} is independently hydrogen or C₁-C₂ alkyl;
R^{c} is hydrogen or C₁-C₄alkyl;
R⁵ is -C(O)OC₁-C₆alkyl, -C₃-C₆cycloalkyl, cyano, -NR⁶R⁷, -C(O)NR^{a}R^{b}, - S(O)ₚ(R¹¹)ₙ, -aryl or-heteroaryl wherein said aryl and heteroaryl are optionally substituted by 1 to 3 independent R⁸;
R⁶ and R⁷ are independently selected from the group consisting of hydrogen and C₁-C₆alkyl;
each R⁸ is independently selected from the group consisting of halogen, C₁-C₆ alkyl and C₁-C₆alkoxy-, C₁-C₆ haloalkyl, C₁-C₆ haloalkoxy-, cyano and S(O)ₚC₁-C₆alkyl);
each R⁹ is independently selected from the group consisting of hydrogen, C₁-C₆alkyl, CᵣalkoxyCₛalkyl, C₁-C₆haloalkyl, CᵣalkoxyCₛhaloalkyl, C₂-C₆alkenyl, C₂-C₆alkynyl, and -(CR⁸R^{b})_{q}R¹⁰;
or R⁴ and R⁹ together with the atoms to which they are joined form a 5-7 membered ring system containing from 1 to 3 heteroatoms, wherein at least one heteratom is N, and any additional heteroatom is independently selected from S, O and N;
R¹⁰ is -C(O)OR^{c}, -OC(O)R^{c}, -C₃-C₆cycloalkyl, or an -aryl, -aryloxy, -heteroaryl, - heteroaryloxy or -heterocyclyl ring, wherein said ring is optionally substituted by 1 to 3 independent R⁸;
each n is independently 0 or 1;
p is 0, 1, or 2;
each q is independently 0, 1, 2, 3, 4, 5 or 6;
r is 1, 2, 3, 4, or 5, s is 1, 2, 3, 4, or 5, and the sum of r+s is less than or equal to 6; and
R¹¹ is C₁-C₆alkyl;
provided that the compound of formula (I) is not *N*-[4-chloro-2-(3-pyridyl)-pyrimidin-5-yl]-2,2,2-trifluoro-acetamide.

Compounds of formula (I) may exist as different geometric isomers, or in different tautomeric forms. This invention covers the use of all such isomers and tautomers, and mixtures thereof in all proportions, as well as isotopic forms such as deuterated compounds.

It may be the case that compounds of formula (I) may contain one or more asymmetric centers and may thus give rise to optical isomers and diastereomers. While shown without respect to stereochemistry, the present invention includes the use of all such optical isomers and diastereomers as well as the racemic and resolved, enantiomerically pure R and S stereoisomers and other mixtures of the R and S stereoisomers and agrochemically acceptable salts thereof.

Each alkyl moiety either alone or as part of a larger group (such as alkoxy, alkylthio, alkoxycarbonyl, alkylcarbonyl, alkylaminocarbonyl, or dialkylaminocarbonyl, *et al*.) may be straight-chained or branched. Typically, the alkyl is, for example, methyl, ethyl, n-propyl, isopropyl, *n*-butyl, *sec*-butyl, isobutyl, *tert*-butyl, *n*-pentyl, neopentyl, or *n*-hexyl. The alkyl groups are generally C₁-C₆ alkyl groups (except where already defined more narrowly), but are preferably C₁-C₄ alkyl or C₁-C₃ alkyl groups, and, more preferably, are C₁-C₂ alkyl groups (such as methyl).

Alkenyl and alkynyl moieties can be in the form of straight or branched chains, and the alkenyl moieties, where appropriate, can be of either the (*E*)- or (*Z*)-configuration. Alkenyl and alkynyl moieties can contain one or more double and/or triple bonds in any combination; but preferably contain only one double bond (for alkenyl) or only one triple bond (for alkynyl).

The alkenyl or alkynyl moieties are typically C₂-C₄ alkenyl or C₂-C₄ alkynyl, more specifically ethenyl (vinyl), prop-2-enyl, prop-3-enyl (allyl), ethynyl, prop-3-ynyl (propargyl), or prop-1-ynyl. Preferably, the term cycloalkyl refers to cyclopropyl, cyclobutyl, cyclopentyl or cyclohexyl.

In the context of the present specification the term "aryl" preferably means phenyl.

Heteroaryl groups and heteroaryl rings (either alone or as part of a larger group, such as heteroaryl-alkyl-) are ring systems containing at least one heteroatom and can be in mono- or bi-cyclic form. Preferably, single rings will contain 1, 2 or 3 ring heteroatoms selected independently from nitrogen, oxygen and sulfur. Typically "heteroaryl" is as used in the context of this invention includes furyl, thienyl, pyrrolyl, pyrazolyl, imidazolyl, triazolyl, oxazolyl, isoxazolyl, thiazolyl, isothiazolyl, oxadiazolyl, pyridyl, pyrimidinyl, pyridazinyl, pyrazinyl, and triazinyl rings, which may or may not be substituted as described herein.

The term "heterocyclyl" as used herein, encompasses ring systems containing at least one heteroatom and that are typically in monocyclic form. Preferably, heterocyclyl groups will contain up to two heteroatoms which will preferably be chosen from nitrogen, oxygen and sulfur. Where a heterocycle contains sulfur as a heteroatom it may be in oxidized form i.e. in the form -S(O)ₚ- where p is an integer of 0, 1 or 2 as defined herein. Such heterocyclyl groups are preferably 3- to 8-membered, and more preferably 3- to 6-membered rings. Examples of heterocyclic groups include oxetanyl, thietanyl, and azetidinyl groups. Such heterocyclylic rings may or may not be substituted as described herein.

Halogen (or halo) encompasses fluorine, chlorine, bromine or iodine. The same correspondingly applies to halogen in the context of other definitions, such as haloalkyl or halophenyl.

Haloalkyl groups having a chain length of from 1 to 6 carbon atoms are, for example, fluoromethyl, difluoromethyl, trifluoromethyl, chloromethyl, dichloromethyl, trichloromethyl, 2,2,2-trifluoroethyl, 2-fluoroethyl, 2-chloroethyl, pentafluoroethyl, 1,1-difluoro-2,2,2-trichloroethyl, 2,2,3,3-tetrafluoroethyl and 2,2,2-trichloroethyl, heptafluoro-n-propyl and perfluoro-n-hexyl.

Alkoxy groups preferably have a chain length of from 1 to 6 carbon atoms. Alkoxy is, for example, methoxy, ethoxy, propoxy, isopropoxy, n-butoxy, isobutoxy, sec-butoxy or tert-butoxy or a pentyloxy or hexyloxy isomer, preferably methoxy and ethoxy. It should also be appreciated that two alkoxy substituents may be present on the same carbon atom.

Haloalkoxy is, for example, fluoromethoxy, difluoromethoxy, trifluoromethoxy, 2,2,2-trifluoroethoxy, 1,1,2,2-tetrafluoroethoxy, 2-fluoroethoxy, 2-chloroethoxy, 2,2-difluoroethoxy or 2,2,2-trichloroethoxy, preferably difluoromethoxy, 2-chloroethoxy or trifluoromethoxy.

C₁-C₆ alkyl-S- (alkylthio) is, for example, methylthio, ethylthio, propylthio, isopropylthio, n-butylthio, isobutylthio, sec-butylthio or tert-butylthio, preferably methylthio or ethylthio.

C₁-C₆ alkyl-S(O)- (alkylsulfinyl) is, for example, methylsulfinyl, ethylsulfinyl, propylsulfinyl, isopropylsulfinyl, n-butylsulfinyl, isobutylsulfinyl, sec-butylsulfinyl or tert-butylsulfinyl, preferably methylsulfinyl or ethylsulfinyl.

C₁-C₆ alkyl-S(O)₂- (alkylsulfonyl) is, for example, methylsulfonyl, ethylsulfonyl, propylsulfonyl, isopropylsulfonyl, n-butylsulfonyl, isobutylsulfonyl, sec-butylsulfonyl or tert-butylsulfonyl, preferably methylsulfonyl or ethylsulfonyl.

Compounds of formula (I) may form, and/or be used as, agronomically acceptable salts with amines (for example ammonia, dimethylamine and triethylamine), alkali metal and alkaline earth metal bases or quaternary ammonium bases. Among the alkali metal and alkaline earth metal hydroxides, oxides, alkoxides and hydrogen carbonates and carbonates used in salt formation, emphasis is to be given to the hydroxides, alkoxides, oxides and carbonates of lithium, sodium, potassium, magnesium and calcium, but especially those of sodium, magnesium and calcium. The corresponding trimethylsulfonium salt may also be used.

Compounds of formula (I) may also form (and /or be used as) agronomically acceptable salts with various organic and/or inorganic acids, for example, acetic, propionic, lactic, citric, tartaric, succinic, fumaric, maleic, malonic, mandelic, malic, phthalic, hydrochloric, hydrobromic, phosphoric, nitric, sulfuric, methanesulfonic, naphthalenesulfonic, benzenesulfonic, toluenesulfonic, camphorsulfonic, and similarly known acceptable acids, when the compound of formula (I) contains a basic moiety.

Where appropriate compounds of formula (I) may also be in the form of/used as an N-oxide.

Compounds of formula (I) may also be in the form of/used as hydrates which may be formed during the salt formation.

Preferred values of X¹, R¹, R², R³, R⁴, R⁵, R⁶, R⁷, R⁸, R⁹, R¹⁰, R¹¹, R^{a}, R^{b}, R^{c}, n, p, q, r, and s are as set out below, and a compound of formula (I) according to the invention may comprise any combination of said values. The skilled person will appreciate that values for any specified set of embodiments may combined with values for any other set of embodiments where such combinations are not mutually exclusive.

The skilled man will appreciate that the values or r and s in the definitions CᵣalkoxyCₛalkyl, CᵣalkoxyCₛthioalkyl, and CᵣalkoxyCₛhaloalkyl are such that the length of the carbon chain within the substituent does not exceed 6. Preferred values of r are 1, 2, or 3. Preferred values for s are 1, 2, or 3. In various embodiments r is 1, s is 1; or, r is 1, s is 2; or r is 1, s is 3; or r is 2, s is 1; r is 2, s is 2; or r is 2, s is 3; or r is 3, s is 1; or r is 3, s is 2, r is 3, s is 3. Particularly preferred substituents thus include methoxymethyl, methoxybutyl, and ethoxymethyl, as well as methylthiomethyl and ethyl thiomethyl.

In one particular embodiment of the present invention, X¹ is N.

In another embodiment of the present invention, X¹ is CR¹. R¹ is preferably halogen or cyano, more preferably fluoro, chloro or cyano.

Most preferably X¹ is N or CF.

Preferably R² is halogen, cyano, C₁-C₆alkyl or C₁-C₆haloalkyl. More preferably R² is cyano, methyl or trifluoromethyl, Even more preferably R² is methyl or trifluoromethyl. Most preferably R² is trifluoromethyl.

Examples of preferred R³ groups for use in the invention may be derived from the preferences for R⁹ and the definitions therein. Particularly preferred R³ groups are as defined within Table 1 below. Preferably R⁴ is selected from the group consisting of hydrogen, C₁-C₄alkyl, C₃-C₆alkenyl, CᵣalkoxyCₛalkyl, CᵣalkylthioCₛalkyl, C₃-C₆alkynyl, C₁-C₃haloalkyl, CᵣalkoxyCₛhaloalkyl, -C(O)R⁹, and (CR^{a}R^{b})_{q}R⁵. In such embodiments where R⁴ is -C(O)R⁹, it is preferred that said R⁹ is C₁-C₃alkyl, C₂-C₄alkenyl, or -(CR^{a}R^{b})_{q}R¹⁰. More preferably when R⁴ is -C(O)R⁹, said R⁹ is hydrogen, -methyl, ethyl, propyl (including cyclopropyl), butenyl, or -(CH₂)₂C(O)OR^{c}.

Where R⁴ is (CR^{a}R^{b})_{q}R⁵, in one set of embodiments, q is 1, 2, or 3; R^{a} and R^{b} are independently hydrogen, methyl or ethyl (preferably hydrogen), and R⁵ is -C(O)NR^{a}R^{b}, - NR⁶R⁷, cyano, or -C₃-C₆cycloalkyl (e.g. cyclopropyl), -aryl (e.g. phenyl) or -heteroaryl (in particular a 5- or 6-membered heteroaryl, such as for example, thiazolyl, pyridyl, pyrimidinyl, pyridazinyl, pyrazinyl, or triazinyl ring), wherein said aryl and heteroaryl are optionally substituted by 1 to 3 independent R⁸.

In such embodiments where R⁵ is -C(O)NR^{a}R^{b}, R^{a} and R^{b} are preferably independently hydrogen, methyl or ethyl (more preferably methyl).

Where R⁵ is an optionally substituted heteroaryl ring, it is particularly preferred that said ring is a pyridyl or thiazolyl ring.

In an alternative embodiment of the present invention, R⁴ and R⁹ together with the atoms to which they are joined form a 5-7 membered ring system containing from 1 to 3 heteroatoms, wherein at least one heteratom is N, and any additional heteroatom is independently selected from S, O and N. Preferably said ring system is a 5- or 6-membered N-linked heterocyclic ring system, and more preferably it is a pyrrolidinone, pyrrolidinedione or piperidinone ring. The skilled man will appreciate that the R⁹ in these embodiments derives from R³.

Preferably each R^{a} is independently hydrogen, methyl or ethyl, more preferably hydrogen or methyl.

Preferably each R^{b} is independently hydrogen, methyl or ethyl, more preferably hydrogen or methyl.

Preferably each q is independently 0, 1, 2 or 3. The skilled man will appreciate that if q is 0 when R⁴ is (CR^{a}R^{b})_{q}R⁵, then R⁴ is equivalent to R⁵. Similarly if q is 0 when R⁹ is (CR^{a}R^{b})_{q}R¹⁰, then R⁹ is equivalent to R¹⁰.

Preferably each R^{c} is hydrogen, methyl or ethyl.

In one particular embodiment R⁶ and R⁷ are both hydrogen. In another embodiment R⁶ is hydrogen and R⁷ is C₁-C₆alkyl (e.g., methyl or ethyl). In another embodiment, R⁶ and R⁷ are both C₁-C₆alkyl, in particular both are methyl, or both are ethyl.

Where an aryl, aryloxy, heteroaryl, heteroaryloxy, or heterocyclic ring system is substituted by 1 to 3 independent R⁸ as described herein, it is preferred that such ring system is substituted by 1 or 2 independent R⁸, more preferably by 1 R⁸. Preferably each R⁸ is independently selected from halogen or C₁-C₃ alkyl, C₁-C₃haloalkyl. More preferably each R⁸ is independently fluoro, chloro or methyl.

Preferably R⁹ is C₁-C₆alkyl [preferably methyl, ethyl, propyl (in particular *iso*-propyl) or butyl (in particular *n*-butyl or *tert*-butyl)], C₁-C₃haloalkyl, C₁-C₃alkoxyC₁-C₃alkyl or (CR^{a}R^{b})_{q}R¹⁰.

R¹⁰ is preferably -C(O)OR^{c}, -OC(O)R^{c}, cyclopropyl, cyclobutyl, cyclopentyl, cyclohexyl, or a ring system selected from phenyl, phenoxy, pyridinyl, pyrimidinyl, thiazolyl, and thiophenyl, wherein said ring system is optionally substituted by 1-3 independent R⁸.

Table 1 below provides 33 specific examples of herbicidal compounds of Formula (I) for use according to the invention.

**Table 1 Specific examples of compounds of Formula (I) for use in the invention wherein X¹, R², R³ and R⁴ are as shown below in the table**

| 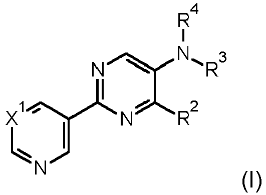 | | | | |
|---|---|---|---|---|
| **Entry No** | **X¹** | **R²** | **R³** | **R⁴** |
| F1 | N | CH₃ | C(O)CH(CH₃)₂ | H |
| F2 | N | CH₃ | C(O)CH(CH₃)₂ | C(O)CH(CH₃)₂ |
| F3 | C-F | CF₃ | C(O)CH₂OCH₃ | H |
| F4 | C-F | CF₃ | C(O)CH₂CH₃ | H |
| F5 | C-F | CF₃ | C(O)CCl₃ | H |
| F6 | C-F | CF₃ | C(O)C(CH₃)₃ | H |
| F7 | C-F | CF₃ | C(O)CH₂CH₃ | C(O)CH₂CH₃ |
| F8 | C-F | CF₃ | C(O)CHCl₂ | H |
| F9 | C-F | CF₃ | 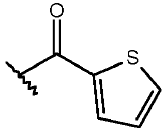 | H |
| F10 | C-F | CF₃ | C(O)Ph | H |
| F11 | C-F | CF₃ | C(O)CH₃ | H |
| F12 | C-F | CF₃ | C(O)CH₂CH₂CH₂CH₃ | H |
| F13 | C-F | CF₃ | C(O)CH(CH₃)₂ | H |
| F14 | C-F | CF₃ | C(O)cyclopropyl | H |
| F15 | C-F | CF₃ | C(O)CH₂CH₂OCH₃ | H |
| F16 | N | CF₃ | C(O)CH₂CH₂OCH₃ | H |
| F17 | N | CF₃ | C(O)CH₂CH₂cyclopentyl | H |
| F18 | C-F | CF₃ | C(O)CH₂OPh | H |
| F19 | C-F | CF₃ | C(O)CH₂CH₂cyclopentyl | H |
| F20 | C-F | CF₃ | C(O)CH(CH₃)₂ | CH₃ |
| F21 | C-F | CF₃ | C(O)cyclopropyl | C(O)cyclopropyl |
| F22 | C-F | CF₃ | 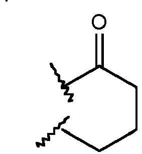 | |
| F23 | C-F | CF₃ | C(O)CH₂CF₃ | H |
| F24 | C-F | CF₃ | C(0)CH=C(CH₃)₂ | H |
| F25 | C-F | CF₃ | 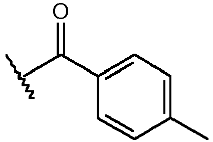 | H |
| F26 | C-F | CF₃ | C(O)cyclobutyl | H |

| **Entry No** | **X¹** | **R²** | **R³** | **R⁴** |
|---|---|---|---|---|
| F27 | C-F | CF₃ | C(O)cyclohexyl | H |
| F28 | C-F | CF₃ | 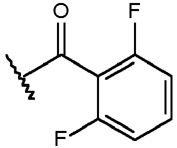 | 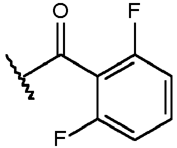 |
| F29 | C-F | CF₃ | 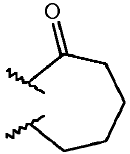 | |
| F30 | C-F | CF₃ | C(O)cyclopropyl | CH₂CN |
| F31 | N | CF₃ | C(O)CH₃ | H |
| F32 | N | CF₃ | C(O)CH(CH₃)₂ | H |
| F33 | C-F | CF₃ | C(O)CH₂CH₂CH₃ | H |

Compounds of Formula (I) may be prepared according to the following schemes, in which the substituents X¹, R¹, R², R³, R⁴, R⁵, R⁶, R⁷, R⁸, R⁹, R¹⁰, R¹¹, R^{a}, R^{b}, R^{c}, n, p, q, r, and s have (unless otherwise stated explicitly) the definitions described hereinbefore, using techniques known to the person skilled in the art of organic chemistry. General methods for the production of compounds of formula (I) are described below. The starting materials used for the preparation of the compounds of the invention may be purchased from the usual commercial suppliers or may be prepared by known methods. The starting materials as well as the intermediates may be purified before use in the next step by state of the art methodologies such as chromatography, crystallization, distillation and filtration.

Typical abbreviations used throughout are as follows:
app = apparent
br. = broad
^{t}Bu = tert-butyl
t-BuOH = *tert*-butanol
d = doublet
dd = double doublet
Dba = dibenzylideneacetone
DCM = dichloromethane
DCE = 1,2-dichloroethane
DMF = *N*, *N*-dimethylformamide
DMSO = dimethylsulfoxide
DPPA = diphenylphosphoryl azide
Et₃N = triethylamine
Et₂O = diethyl ether
EtOAc = ethyl acetate
EtOH = ethanol
m = multiplet
mCPBA = *meta*-chloro-perbenzoic acid
Me = methyl
MeOH = methanol
Ms = mesylate
NMR = nuclear magnetic resonance
NaOEt = sodium ethoxide
NaSMe = sodium thiomethoxide
Ph = phenyl
q = quartet
RT = room temperature
s = singlet
t = triplet
Tf = triflate
TFA = trifluoroacetic acid
THF = tetrahydrofuran
TMS = tetramethylsilane
tr = retention time

Processes for preparation of compounds of the present invention, which optionally can be in the form of an agrochemically acceptable salt, are now described, and form further aspects of the present invention.

Processes for preparation of compounds of the present invention, which optionally can be in the form of an agrochemically acceptable salt, are now described, and form further aspects of the present invention.

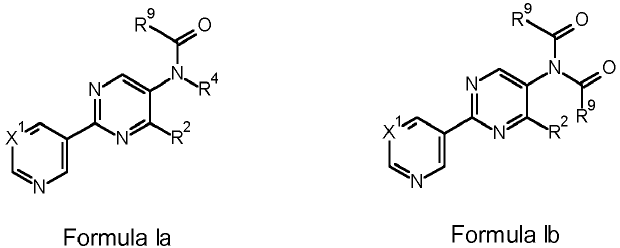

Compounds of Formula Ia are compounds of Formula (I) where R³ is COR⁹, compounds of Formula Ib are compounds of Formula I where both R³ and R⁴ are COR⁹.

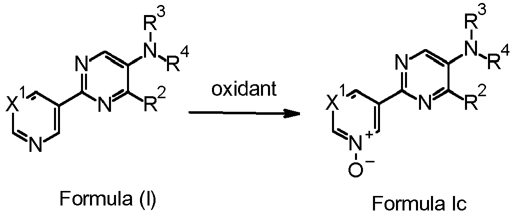

A compound of Formula Ic, which is a compound of Formula (I) where n = 1, may be prepared from a compound of Formula I where n = 0 *via* reaction with a suitable oxidant in a suitable solvent. Suitable oxidants may include 3-chloroperbenzoic acid. Suitable solvents may include DCM.

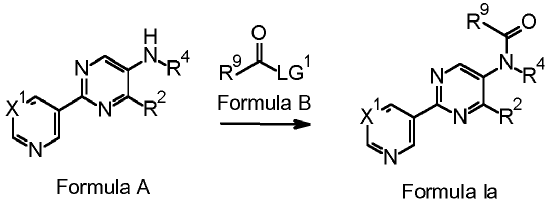

A compound of Formula Ia may be prepared from a compound of Formula A *via* an amide formation reaction with a compound of Formula B in the presence of a suitable base (where LG¹ is a suitable activated leaving group such as F, Cl or pentafluorophenol) optionally (when LG¹ is OH or OR) in the presence of a suitable amide coupling reagent and in a suitable solvent. Suitable bases include pyridine or triethylamine. Suitable amide coupling reagents include 1-propanephosphonic acid cyclic anhydride. Suitable solvents include DCM, DCE, THF or Me-THF. Compounds of formula B are commercially available or may be prepared by methods well known in the literature.

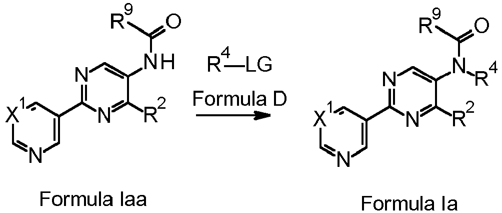

In an alternative approach, a compound of Formula Ia may be prepared from a compound of Formula laa (a compound of formula (I) where R⁴ is hydrogen) *via* an alkylation reaction with a compound of Formula D (where LG is a suitable leaving group such as I, Br or OMs) in the presence of a suitable base and in a suitable solvent. Suitable bases include sodium hydride. Suitable solvents include THF or DMF. Compounds of Formula D are commercially available or may be prepared by methods well known in the literature.

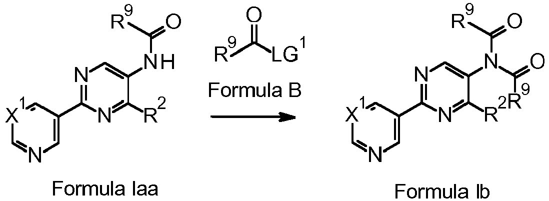

A compound of Formula Ib may be prepared from a compound of Formula laa *via* an amide formation reaction with a compound of Formula B, in the presence of a suitable base (when LG¹ is a suitable activated leaving group such as F, Cl or pentafluorophenol) and in a suitable solvent. Suitable bases may include pyridine or triethylamine. Suitable solvents may include DCM or DCE. Compounds of formula B are commercially available or may be prepared by methods well known in the literature.

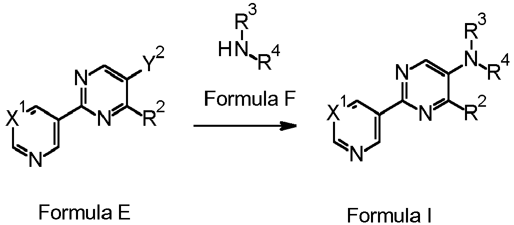

In an alternative approach, a compound of Formula (I) may be prepared from a compound of Formula E (where Y² is a suitable halogen, such as Cl, Br or I or a suitable pseudohalogen, such as OTf) *via* a cross-coupling reaction with a compound of Formula F, optionally in the presence of a suitable catalyst/ligand system, optionally in the presence of a suitable base and in a suitable solvent. Suitable catalyst/ligand systems include Cul/N,N-dimethyl-1,2-diaminocyclohexane or Cul/N-methyl-(methylamino)ethylamine. Suitable bases include potassium phosphate and suitable solvents may include toluene or 1,4-dioxane. Compounds of Formula F are commercially available or may be prepared by methods well known in the literature.

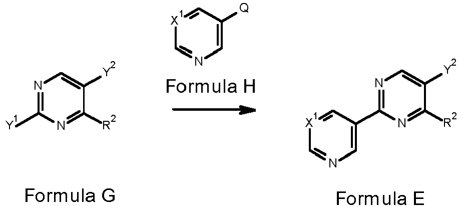

A compound of Formula E may be prepared from a compound of Formula G (where Y¹ is a suitable halogen, such as Cl or Br) via a cross-coupling reaction with a compound of Formula H (where Q is a suitable coupling group, such as -B(OH)₂ or - B(OR)₂ or -SnR₃) in the presence of a suitable catalyst, optionally in the presence of a suitable base and in a suitable solvent. Suitable catalysts may include Pd(PPh₃)₄, Pd₂Cl₂(PPh₃)₂ or [1,1'-bis(diphenylphosphino)ferrocene]dichloropalladium(II). Suitable bases may include K₂CO₃ or CsF. Suitable solvents may include ethylene glycol dimethyl ether, acetonitrile, DMF, ethanol, 1,4-dioxane and/or water. Compounds of Formula G and of Formula H are commercially available or can be prepared by methods well known in the literature.

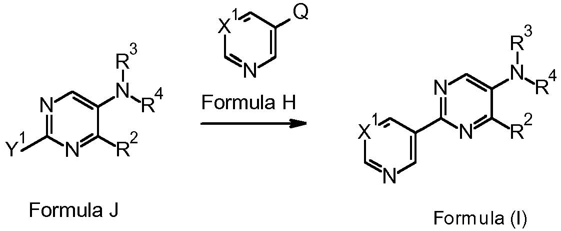

In a yet further alternative approach, a compound of Formula (I) may be prepared from a compound of Formula J (where Y¹ is a suitable halogen, such as Cl, Br or I or a suitable pseudohalogen, such as OTf) *via* a cross-coupling reaction with a compound of Formula H (where Q is a suitable coupling group, such as -B(OH)₂ or -B(OR)₂ or -SnR₃) in the presence of a suitable catalyst, optionally in the presence of a suitable base and in a suitable solvent. Suitable catalysts may include Pd(PPh₃)₄, Pd₂Cl₂(PPh₃)₂) or [1,1'-bis(diphenylphosphino)ferrocene]dichloropalladium(II). Suitable bases may include K₂CO₃ or CsF. Suitable solvents may include ethylene glycol dimethyl ether, acetonitrile, DMF, ethanol, 1,4-dioxane and/or water. Compounds of Formula H are commercially available or can be prepared by methods well known in the literature.

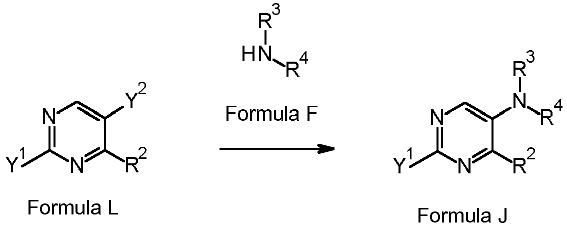

A compound of Formula J may be prepared from a compound of Formula L (where Y² is a suitable halogen, such as Br or I or a suitable pseudohalogen, such as OTf via reaction with a compound of Formula F, optionally in the presence of a suitable catalyst/ligand system and optionally in the presence of a suitable base and in a suitable solvent. Suitable catalyst/ligand systems include Cul/N,N-dimethyl-1,2-diaminocyclohexane or Cul/N-methyl-(methylamino)ethylamine. Suitable bases include potassium phosphate and suitable solvents may include toluene or 1,4-dioxane. Compounds of Formula F and of Formula L are commercially available or may be prepared by methods well known in the literature.

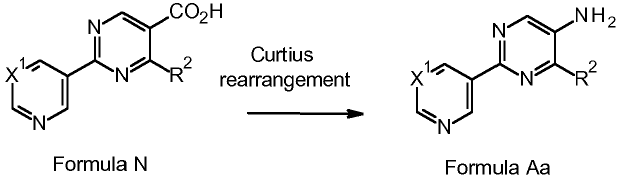

In an alternative approach, a compound of Formula Aa (a compound of Formula A where R⁴ = H) may be prepared from a compound of Formula N via a Curtius rearrangement using a suitable reagent in a suitable solvent. Suitable reagents include DPPA and suitable solvents include toluene.

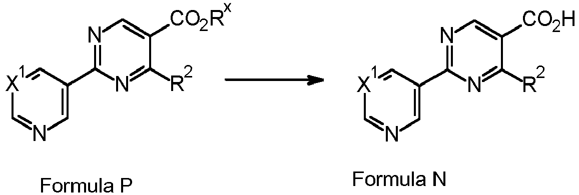

A compound of Formula N may be prepared from a compound of Formula P (where R^{x} is C₁₋₆ alkyl) via a hydrolysis reaction in the presence of a suitable reagent in a suitable solvent. Suitable reagents include NaOH, LiOH or KOH). Suitable solvents include H₂O, THF, MeOH or EtOH or mixtures thereof.

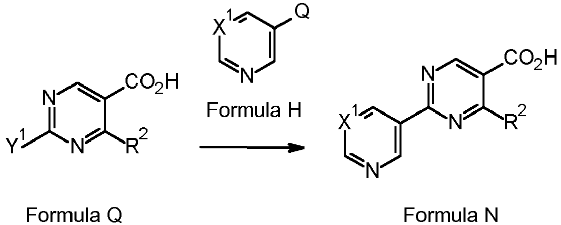

In an alternative approach, a compound of Formula N may be prepared from a compound of Formula Q (where Y¹ is a suitable halogen, such as Cl or Br) via a cross-coupling reaction with a compound of Formula H (where Q is a suitable coupling group, such as -B(OH)₂ or -B(OR)₂ or -SnR₃) in the presence of a suitable catalyst, optionally in the presence of a suitable base and in a suitable solvent. Suitable catalysts may include Pd(PPh₃)₄ or [1,1'-bis(diphenylphosphino)ferrocene]dichloropalladium(II). Suitable bases may include K₂CO₃, Na₂CO₃, Cs₂CO₃, K₃PO₄ or CsF. Suitable solvents may include ethylene glycol dimethyl ether, acetonitrile, DMF, ethanol, 1,4-dioxane, tetrahydrofuran and/or water. Compounds of Formula H are commercially available or can be prepared by methods well known in the literature.

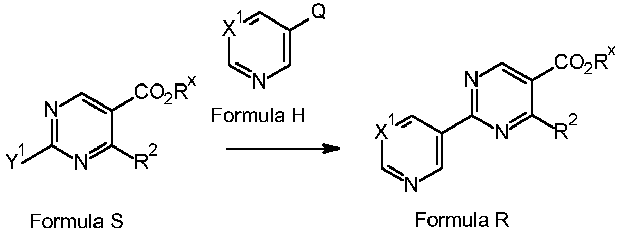

A compound of Formula R may be prepared from a compound of Formula S (where Y¹ is a suitable halogen, such as Cl or Br) via a cross-coupling reaction with a compound of Formula H (where Q is a suitable coupling group, such as -B(OH)₂ or - B(OR)₂ or -SnR₃) in the presence of a suitable catalyst, optionally in the presence of a suitable base and in a suitable solvent. Suitable catalysts may include Pd(PPh₃)₄ or [1,1'-bis(diphenylphosphino)ferrocene]dichloropalladium(II). Suitable bases may include K₂CO₃, Na₂CO₃, Cs₂CO₃, K₃PO₄ or CsF. Suitable solvents may include ethylene glycol dimethyl ether, acetonitrile, DMF, ethanol, 1,4-dioxane, tetrahydrofuran and/or water. Compounds of Formula H are commercially available or can be prepared by methods well known in the literature.

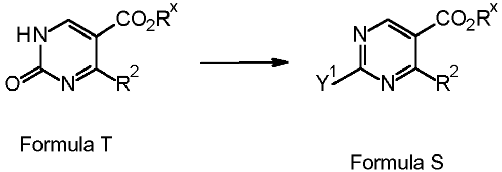

A compound of Formula S (where Y¹ is a suitable halogen, such as Br or Cl) may be prepared from a compound of Formula T via a halogenation reaction using a suitable reagent, optionally in a suitable solvent. Suitable reagents may include POCl₃. Suitable solvents may include DCM or DCE.

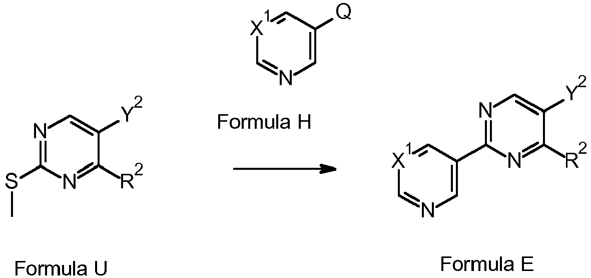

In an alternative approach, a compound of Formula E may be prepared from a compound of Formula U via a cross-coupling reaction (known as a Liebeskind-Srogl coupling) with a compound of Formula H (where Q is a suitable coupling group, such as -B(OH)₂) in the presence of a suitable catalyst, a suitable ligand, a suitable co-catalyst and in a suitable solvent. Suitable catalysts may include tris(dibenzylideneacetone)dipalladium(0), suitable ligands may include tris(2-furyl)phosphane, suitable co-catalysts may include copper(I) 3-methylsalicylate and suitable solvents may include THF. Compounds of Formula H are commercially available or can be prepared by methods well known in the literature.

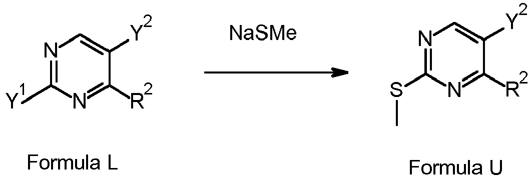

A compound of Formula U may be prepared from a compound of Formula L (where Y¹ is a suitable halogen, such as Cl) *via* a displacement reaction with NaSMe in a suitable solvent. Suitable solvents may include MeOH.

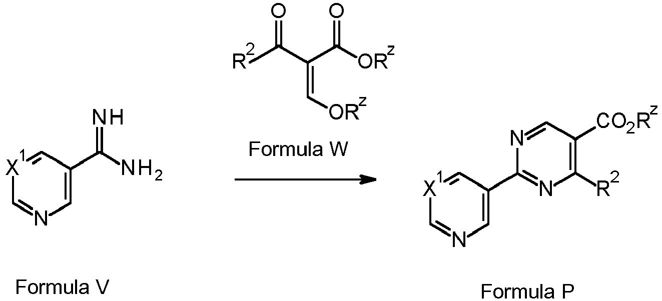

In a yet further alternative approach, a compound of Formula P may be prepared from a compound of Formula V *via* a cyclisation reaction with a compound of Formula W (where R^{z} = C₁-C₃ alkyl) in the presence of a suitable base and in a suitable solvent. Suitable bases may include NaOEt. Suitable solvents may include EtOH. Compounds of Formula V and of Formula W may be prepared by methods well known in the literature.

The compounds of Formula (I) as described herein may be used as herbicides by themselves, but they are generally formulated into herbicidal compositions using formulation adjuvants, such as carriers, solvents and surface-active agents (SFAs). Thus, the present invention further provides a herbicidal composition comprising a herbicidal compound as described herein and an agriculturally acceptable formulation adjuvant. The composition can be in the form of concentrates which are diluted prior to use, although ready-to-use compositions can also be made. The final dilution is usually made with water, but can be made instead of, or in addition to, water, with, for example, liquid fertilisers, micronutrients, biological organisms, oil or solvents.

Such herbicidal compositions generally comprise from 0.1 to 99 % by weight, especially from 0.1 to 95 % by weight of compounds of Formula (I) and from 1 to 99.9 % by weight of a formulation adjuvant, which preferably includes from 0 to 25 % by weight of a surface-active substance.

The compositions can be chosen from a number of formulation types, many of which are known from the Manual on Development and Use of FAO Specifications for Plant Protection Products, 5th Edition, 1999. These include dustable powders (DP), soluble powders (SP), water soluble granules (SG), water dispersible granules (WG), wettable powders (WP), granules (GR) (slow or fast release), soluble concentrates (SL), oil miscible liquids (OL), ultra low volume liquids (UL), emulsifiable concentrates (EC), dispersible concentrates (DC), emulsions (both oil in water (EW) and water in oil (EO)), micro-emulsions (ME), suspension concentrates (SC), aerosols, capsule suspensions (CS) and seed treatment formulations. The formulation type chosen in any instance will depend upon the particular purpose envisaged and the physical, chemical and biological properties of the compound of Formula (I).

Dustable powders (DP) may be prepared by mixing a compound of Formula (I) with one or more solid diluents (for example natural clays, kaolin, pyrophyllite, bentonite, alumina, montmorillonite, kieselguhr, chalk, diatomaceous earths, calcium phosphates, calcium and magnesium carbonates, sulphur, lime, flours, talc and other organic and inorganic solid carriers) and mechanically grinding the mixture to a fine powder.

Soluble powders (SP) may be prepared by mixing a compound of Formula (I) with one or more water-soluble inorganic salts (such as sodium bicarbonate, sodium carbonate or magnesium sulphate) or one or more water-soluble organic solids (such as a polysaccharide) and, optionally, one or more wetting agents, one or more dispersing agents or a mixture of said agents to improve water dispersibility/solubility. The mixture is then ground to a fine powder. Similar compositions may also be granulated to form water soluble granules (SG).

Wettable powders (WP) may be prepared by mixing a compound of Formula (I) with one or more solid diluents or carriers, one or more wetting agents and, preferably, one or more dispersing agents and, optionally, one or more suspending agents to facilitate the dispersion in liquids. The mixture is then ground to a fine powder. Similar compositions may also be granulated to form water dispersible granules (WG).

Granules (GR) may be formed either by granulating a mixture of a compound of Formula (I) and one or more powdered solid diluents or carriers, or from pre-formed blank granules by absorbing a compound of Formula (I) (or a solution thereof, in a suitable agent) in a porous granular material (such as pumice, attapulgite clays, fuller's earth, kieselguhr, diatomaceous earths or ground corn cobs) or by adsorbing a compound of Formula (I) (or a solution thereof, in a suitable agent) on to a hard core material (such as sands, silicates, mineral carbonates, sulphates or phosphates) and drying if necessary. Agents which are commonly used to aid absorption or adsorption include solvents (such as aliphatic and aromatic petroleum solvents, alcohols, ethers, ketones and esters) and sticking agents (such as polyvinyl acetates, polyvinyl alcohols, dextrins, sugars and vegetable oils). One or more other additives may also be included in granules (for example an emulsifying agent, wetting agent or dispersing agent).

Dispersible Concentrates (DC) may be prepared by dissolving a compound of Formula (I) in water or an organic solvent, such as a ketone, alcohol or glycol ether. These solutions may contain a surface active agent (for example to improve water dilution or prevent crystallisation in a spray tank).

Emulsifiable concentrates (EC) or oil-in-water emulsions (EW) may be prepared by dissolving a compound of Formula (I) in an organic solvent (optionally containing one or more wetting agents, one or more emulsifying agents or a mixture of said agents). Suitable organic solvents for use in ECs include aromatic hydrocarbons (such as alkylbenzenes or alkylnaphthalenes, exemplified by SOLVESSO 100, SOLVESSO 150 and SOLVESSO 200; SOLVESSO is a Registered Trade Mark), ketones (such as cyclohexanone or methylcyclohexanone) and alcohols (such as benzyl alcohol, furfuryl alcohol or butanol), N-alkylpyrrolidones (such as N-methylpyrrolidone or N-octylpyrrolidone), dimethyl amides of fatty acids (such as C₈-C₁₀ fatty acid dimethylamide) and chlorinated hydrocarbons. An EC product may spontaneously emulsify on addition to water, to produce an emulsion with sufficient stability to allow spray application through appropriate equipment.

Preparation of an EW involves obtaining a compound of Formula (I) either as a liquid (if it is not a liquid at room temperature, it may be melted at a reasonable temperature, typically below 70°C) or in solution (by dissolving it in an appropriate solvent) and then emulsifying the resultant liquid or solution into water containing one or more SFAs, under high shear, to produce an emulsion. Suitable solvents for use in EWs include vegetable oils, chlorinated hydrocarbons (such as chlorobenzenes), aromatic solvents (such as alkylbenzenes or alkylnaphthalenes) and other appropriate organic solvents which have a low solubility in water.

Microemulsions (ME) may be prepared by mixing water with a blend of one or more solvents with one or more SFAs, to produce spontaneously a thermodynamically stable isotropic liquid formulation. A compound of Formula (I) is present initially in either the water or the solvent/SFA blend. Suitable solvents for use in MEs include those hereinbefore described for use in in ECs or in EWs. An ME may be either an oil-in-water or a water-in-oil system (which system is present may be determined by conductivity measurements) and may be suitable for mixing water-soluble and oil-soluble pesticides in the same formulation. An ME is suitable for dilution into water, either remaining as a microemulsion or forming a conventional oil-in-water emulsion.

Suspension concentrates (SC) may comprise aqueous or non-aqueous suspensions of finely divided insoluble solid particles of a compound of Formula (I). SCs may be prepared by ball or bead milling the solid compound of Formula (I) in a suitable medium, optionally with one or more dispersing agents, to produce a fine particle suspension of the compound. One or more wetting agents may be included in the composition and a suspending agent may be included to reduce the rate at which the particles settle. Alternatively, a compound of Formula (I) may be dry milled and added to water, containing agents hereinbefore described, to produce the desired end product.

Aerosol formulations comprise a compound of Formula (I) and a suitable propellant (for example n-butane). A compound of Formula (I) may also be dissolved or dispersed in a suitable medium (for example water or a water miscible liquid, such as *n-*propanol) to provide compositions for use in non-pressurised, hand-actuated spray pumps.

Capsule suspensions (CS) may be prepared in a manner similar to the preparation of EW formulations but with an additional polymerisation stage such that an aqueous dispersion of oil droplets is obtained, in which each oil droplet is encapsulated by a polymeric shell and contains a compound of Formula (I) and, optionally, a carrier or diluent therefor. The polymeric shell may be produced by either an interfacial polycondensation reaction or by a coacervation procedure. The compositions may provide for controlled release of the compound of Formula (I) and they may be used for seed treatment. A compound of Formula (I) may also be formulated in a biodegradable polymeric matrix to provide a slow, controlled release of the compound.

The composition may include one or more additives to improve the biological performance of the composition, for example by improving wetting, retention or distribution on surfaces; resistance to rain on treated surfaces; or uptake or mobility of a compound of Formula (I). Such additives include surface active agents (SFAs), spray additives based on oils, for example certain mineral oils or natural plant oils (such as soy bean and rape seed oil), and blends of these with other bio-enhancing adjuvants (ingredients which may aid or modify the action of a compound of Formula (I)).

Wetting agents, dispersing agents and emulsifying agents may be SFAs of the cationic, anionic, amphoteric or non-ionic type.

Suitable SFAs of the cationic type include quaternary ammonium compounds (for example cetyltrimethyl ammonium bromide), imidazolines and amine salts.

Suitable anionic SFAs include alkali metals salts of fatty acids, salts of aliphatic monoesters of sulphuric acid (for example sodium lauryl sulphate), salts of sulphonated aromatic compounds (for example sodium dodecylbenzenesulphonate, calcium dodecylbenzenesulphonate, butylnaphthalene sulphonate and mixtures of sodium di*iso*propyl- and tri-*iso*propyl-naphthalene sulphonates), ether sulphates, alcohol ether sulphates (for example sodium laureth-3-sulphate), ether carboxylates (for example sodium laureth-3-carboxylate), phosphate esters (products from the reaction between one or more fatty alcohols and phosphoric acid (predominately mono-esters) or phosphorus pentoxide (predominately di-esters), for example the reaction between lauryl alcohol and tetraphosphoric acid; additionally these products may be ethoxylated), sulphosuccinamates, paraffin or olefine sulphonates, taurates and lignosulphonates.

Suitable SFAs of the amphoteric type include betaines, propionates and glycinates.

Suitable SFAs of the non-ionic type include condensation products of alkylene oxides, such as ethylene oxide, propylene oxide, butylene oxide or mixtures thereof, with fatty alcohols (such as oleyl alcohol or cetyl alcohol) or with alkylphenols (such as octylphenol, nonylphenol or octylcresol); partial esters derived from long chain fatty acids or hexitol anhydrides; condensation products of said partial esters with ethylene oxide; block polymers (comprising ethylene oxide and propylene oxide); alkanolamides; simple esters (for example fatty acid polyethylene glycol esters); amine oxides (for example lauryl dimethyl amine oxide); and lecithins.

Suitable suspending agents include hydrophilic colloids (such as polysaccharides, polyvinylpyrrolidone or sodium carboxymethylcellulose) and swelling clays (such as bentonite or attapulgite).

Herbicidal compositions as described herein may further comprise at least one additional pesticide. For example, the compounds of formula (I) can also be used in combination with other herbicides or plant growth regulators. In a preferred embodiment the additional pesticide is a herbicide and/or herbicide safener. Examples of such mixtures are, in which 'I' represents a compound of Formula (I), I + acetochlor, I + acifluorfen, I + acifluorfen-sodium, I + aclonifen, I + acrolein, I + alachlor, I + alloxydim, I + ametryn, I + amicarbazone, I + amidosulfuron, I + aminopyralid, I + amitrole, I + anilofos, I + asulam, I + atrazine, I + azafenidin, I + azimsulfuron, I + BCPC, I + beflubutamid, I + benazolin, I + bencarbazone, I + benfluralin, I + benfuresate, I + bensulfuron, I + bensulfuron-methyl, I + bensulide, I + bentazone, I + benzfendizone, I + benzobicyclon, I + benzofenap, I + bicyclopyrone, I + bifenox, I + bilanafos, I + bispyribac, I + bispyribac-sodium, I + borax, I + bromacil, I + bromobutide, I + bromoxynil, I + butachlor, I + butamifos, I + butralin, I + butroxydim, I + butylate, I + cacodylic acid, I + calcium chlorate, I + cafenstrole, I + carbetamide, I + carfentrazone, I + carfentrazone-ethyl, I + chlorflurenol, I + chlorflurenol-methyl, I + chloridazon, I + chlorimuron, I + chlorimuron-ethyl, I + chloroacetic acid, I + chlorotoluron, I + chlorpropham, I + chlorsulfuron, I + chlorthal, I + chlorthal-dimethyl, I + cinidon-ethyl, I + cinmethylin, I + cinosulfuron, I + cisanilide, I + clethodim, I + clodinafop, I + clodinafop-propargyl, I + clomazone, I + clomeprop, I + clopyralid, I + cloransulam, I + cloransulam-methyl, I + cyanazine, I + cycloate, I + cyclosulfamuron, I + cycloxydim, I + cyhalofop, I + cyhalofop-butyl,, I + 2,4-D, I + daimuron, I + dalapon, I + dazomet, I + 2,4-DB, I + I + desmedipham, I + dicamba, I + dichlobenil, I + dichlorprop, I + dichlorprop-P, I + diclofop, I + diclofop-methyl, I + diclosulam, I + difenzoquat, I + difenzoquat metilsulfate, I + diflufenican, I + diflufenzopyr, I + dimefuron, I + dimepiperate, I + dimethachlor, I + dimethametryn, I + dimethenamid, I + dimethenamid-P, I + dimethipin, I + dimethylarsinic acid, I + dinitramine, I + dinoterb, I + diphenamid, I + dipropetryn, I + diquat, I + diquat dibromide, I + dithiopyr, I + diuron, I + endothal, I + EPTC, I + esprocarb, I + ethalfluralin, I + ethametsulfuron, I + ethametsulfuron-methyl, I + ethephon, I + ethofumesate, I + ethoxyfen, I + ethoxysulfuron, I + etobenzanid, I + fenoxaprop-P, I + fenoxaprop-P-ethyl, I + fentrazamide, I + ferrous sulfate, I + flamprop-M, I + flazasulfuron, I + florasulam, I + fluazifop, I + fluazifop-butyl, I + fluazifop-P, I + fluazifop-P-butyl, I + fluazolate, I + flucarbazone, I + flucarbazone-sodium, I + flucetosulfuron, I + fluchloralin, I + flufenacet, I + flufenpyr, I + flufenpyr-ethyl, I + flumetralin, I + flumetsulam, I + flumiclorac, I + flumiclorac-pentyl, I + flumioxazin, I + flumipropin, I + fluometuron, I + fluoroglycofen, I + fluoroglycofen-ethyl, I + fluoxaprop, I + flupoxam, I + flupropacil, I + flupropanate, I + flupyrsulfuron, I + flupyrsulfuron-methyl-sodium, I + flurenol, I + fluridone, I + flurochloridone, I + fluroxypyr, I + flurtamone, I + fluthiacet, I + fluthiacet-methyl, I + fomesafen, I + foramsulfuron, I + fosamine, I + glufosinate, I + glufosinate-ammonium, I + glyphosate, I + halauxifen, I + halosulfuron, I + halosulfuron-methyl, I + haloxyfop, I + haloxyfop-P, I + hexazinone, I + imazamethabenz, I + imazamethabenz-methyl, I + imazamox, I + imazapic, I + imazapyr, I + imazaquin, I + imazethapyr, I + imazosulfuron, I + indanofan, I + indaziflam, I + iodomethane, I + iodosulfuron, I + iodosulfuron-methyl-sodium, I + ioxynil, I + isoproturon, I + isouron, I + isoxaben, I + isoxachlortole, I + isoxaflutole, I + isoxapyrifop, I + karbutilate, I + lactofen, I + lenacil, I + linuron, I + mecoprop, I + mecoprop-P, I + mefenacet, I + mefluidide, I + mesosulfuron, I + mesosulfuron-methyl, I + mesotrione, I + metam, I + metamifop, I + metamitron, I + metazachlor, I + methabenzthiazuron, I + methazole, I + methylarsonic acid, I + methyldymron, I + methyl isothiocyanate, I + metolachlor, I + S-metolachlor, I + metosulam, I + metoxuron, I + metribuzin, I + metsulfuron, I + metsulfuron-methyl, I + molinate, I + monolinuron, I + naproanilide, I + napropamide, I + naptalam, I + neburon, I + nicosulfuron, I + n-methyl glyphosate, I + nonanoic acid, I + norflurazon, I + oleic acid (fatty acids), I + orbencarb, I + orthosulfamuron, I + oryzalin, I + oxadiargyl, I + oxadiazon, I + oxasulfuron, I + oxaziclomefone, I + oxyfluorfen, I + paraquat, I + paraquat dichloride, I + pebulate, I + pendimethalin, I + penoxsulam, I + pentachlorophenol, I + pentanochlor, I + pentoxazone, I + pethoxamid, I + phenmedipham, I + picloram, I + picolinafen, I + pinoxaden, I + piperophos, I + pretilachlor, I + primisulfuron, I + primisulfuron-methyl, I + prodiamine, I + profoxydim, I + prohexadione-calcium, I + prometon, I + prometryn, I + propachlor, I + propanil, I + propaquizafop, I + propazine, I + propham, I + propisochlor, I + propoxycarbazone, I + propoxycarbazone-sodium, I + propyzamide, I + prosulfocarb, I + prosulfuron, I + pyraclonil, I + pyraflufen, I + pyraflufen-ethyl, I + pyrasulfotole, I + pyrazolynate, I + pyrazosulfuron, I + pyrazosulfuron-ethyl, I + pyrazoxyfen, I + pyribenzoxim, I + pyributicarb, I + pyridafol, I + pyridate, I + pyriftalid, I + pyriminobac, I + pyriminobac-methyl, I + pyrimisulfan, I + pyrithiobac, I + pyrithiobac-sodium, I + pyroxasulfone, I + pyroxsulam, I + quinclorac, I + quinmerac, I + quinoclamine, I + quizalofop, I + quizalofop-P, I + rimsulfuron, I + saflufenacil, I + sethoxydim, I + siduron, I + simazine, I + simetryn, I + sodium chlorate, I + sulcotrione, I + sulfentrazone, I + sulfometuron, I + sulfometuron-methyl, I + sulfosate, I + sulfosulfuron, I + sulfuric acid, I + tebuthiuron, I + tefuryltrione, I + tembotrione, I + tepraloxydim, I + terbacil, I + terbumeton, I + terbuthylazine, I + terbutryn, I + thenylchlor, I + thiazopyr, I + thifensulfuron, I + thiencarbazone, I + thifensulfuron-methyl, I + thiobencarb, I + topramezone, I + tralkoxydim, I + tri-allate, I + triasulfuron, I + triaziflam, I + tribenuron, I + tribenuron-methyl, I + triclopyr, I + trietazine, I + trifloxysulfuron, I + trifloxysulfuron-sodium, I + trifluralin, I + triflusulfuron, I + triflusulfuron-methyl, I + trihydroxytriazine, I + trinexapac-ethyl, I + tritosulfuron, I + [3-[2-chloro-4-fluoro-5-(1-methyl-6-trifluoromethyl-2,4-dioxo-1,2,3,4-tetrahydropyrimidin-3-yl)phenoxy]-2-pyridyloxy]acetic acid ethyl ester (CAS RN 353292-31-6). The compounds of formula (I) and/or compositions of the present invention may also be combined with herbicidal compounds disclosed in WO06/024820 and/or WO07/096576.

The mixing partners of the compound of Formula (I) may also be in the form of esters or salts, as mentioned e.g. in The Pesticide Manual, Sixteenth Edition, British Crop Protection Council, 2012.

The compound of Formula (I) can also be used in mixtures with other agrochemicals such as fungicides, nematicides or insecticides, examples of which are given in The Pesticide Manual (*supra*)*.*

The mixing ratio of the compound of Formula (I) to the mixing partner is preferably from 1: 100 to 1000:1.

The mixtures can advantageously be used in the above-mentioned formulations (in which case "active ingredient" relates to the respective mixture of compound of Formula I with the mixing partner).

The compounds of Formula (I) as described herein can also be used in combination with one or more safeners. Likewise, mixtures of a compound of Formula (I) as described herein with one or more further herbicides can also be used in combination with one or more safeners. The safeners can be AD 67 (MON 4660), benoxacor, cloquintocet-mexyl, cyprosulfamide (CAS RN 221667-31-8), dichlormid, fenchlorazole-ethyl, fenclorim, fluxofenim, furilazole and the corresponding R isomer, isoxadifen-ethyl, mefenpyr-diethyl, oxabetrinil, N-isopropyl-4-(2-methoxy-benzoylsulfamoyl)-benzamide (CAS RN 221668-34-4). Other possibilities include safener compounds disclosed in, for example, EP0365484 e.g N-(2-methoxybenzoyl)-4-[(methylaminocarbonyl)amino]benzenesulfonamide. Particularly preferred are mixtures of a compound of Formula I with cyprosulfamide, isoxadifen-ethyl, cloquintocet-mexyl and/or N-(2-methoxybenzoyl)-4-[(methyl-aminocarbonyl)amino]benzenesulfonamide.

The safeners of the compound of Formula (I) may also be in the form of esters or salts, as mentioned e.g. in The Pesticide Manual (*supra*). The reference to cloquintocet-mexyl also applies to a lithium, sodium, potassium, calcium, magnesium, aluminium, iron, ammonium, quaternary ammonium, sulfonium or phosphonium salt thereof as disclosed in WO 02/34048, and the reference to fenchlorazole-ethyl also applies to fenchlorazole, etc.

Preferably the mixing ratio of compound of Formula (I) to safener is from 100:1 to 1:10, especially from 20:1 to 1:1.

The mixtures can advantageously be used in the above-mentioned formulations (in which case "active ingredient" relates to the respective mixture of compound of Formula (I) with the safener).

As described above, compounds of formula (I) and/or compositions comprising such compounds may be used in methods of controlling unwanted plant growth, and in particular in controlling unwanted plant growth in crops of useful plants. Thus, the present invention further provides a method of selectively controlling weeds at a locus comprising crop plants and weeds, wherein the method comprises application to the locus, of a weed-controlling amount of a compound of formula (I), or a composition as described herein. 'Controlling' means killing, reducing or retarding growth or preventing or reducing germination. Generally the plants to be controlled are unwanted plants (weeds). 'Locus' means the area in which the plants are growing or will grow.

The rates of application of compounds of Formula (I) may vary within wide limits and depend on the nature of the soil, the method of application (pre- or post-emergence; seed dressing; application to the seed furrow; no tillage application etc.), the crop plant, the weed(s) to be controlled, the prevailing climatic conditions, and other factors governed by the method of application, the time of application and the target crop. The compounds of Formula I according to the invention are generally applied at a rate of from 10 to 2000 g/ha, especially from 50 to 1000 g/ha.

The application is generally made by spraying the composition, typically by tractor mounted sprayer for large areas, but other methods such as dusting (for powders), drip or drench can also be used.

Useful plants in which the composition according to the invention can be used include crops such as cereals, for example barley and wheat, cotton, oilseed rape, sunflower, maize, rice, soybeans, sugar beet, sugar cane and turf.

Crop plants can also include trees, such as fruit trees, palm trees, coconut trees or other nuts. Also included are vines such as grapes, fruit bushes, fruit plants and vegetables.

Crops are to be understood as also including those crops which have been rendered tolerant to herbicides or classes of herbicides (e.g. ALS-, GS-, EPSPS-, PPO-, ACCase- and HPPD-inhibitors) by conventional methods of breeding or by genetic engineering. An example of a crop that has been rendered tolerant to imidazolinones, e.g. imazamox, by conventional methods of breeding is Clearfield® summer rape (canola). Examples of crops that have been rendered tolerant to herbicides by genetic engineering methods include e.g. glyphosate- and glufosinate-resistant maize varieties commercially available under the trade names RoundupReady® and LibertyLink®, as well as those where the crop plant has been engineered to over-express homogentisate solanesyltransferase as taught in, for example, WO2010/029311.

Crops are also to be understood as being those which have been rendered resistant to harmful insects by genetic engineering methods, for example Bt maize (resistant to European corn borer), Bt cotton (resistant to cotton boll weevil) and also Bt potatoes (resistant to Colorado beetle). Examples of Bt maize are the Bt 176 maize hybrids of NK® (Syngenta Seeds). The Bt toxin is a protein that is formed naturally by *Bacillus thuringiensis* soil bacteria. Examples of toxins, or transgenic plants able to synthesise such toxins, are described in EP-A-451 878, EP-A-374 753, WO 93/07278, WO 95/34656, WO 03/052073 and EP-A-427 529. Examples of transgenic plants comprising one or more genes that code for an insecticidal resistance and express one or more toxins are KnockOut® (maize), Yield Gard® (maize), NuCOTIN33B® (cotton), Bollgard® (cotton), NewLeaf® (potatoes), NatureGard® and Protexcta®. Plant crops or seed material thereof can be both resistant to herbicides and, at the same time, resistant to insect feeding ("stacked" transgenic events). For example, seed can have the ability to express an insecticidal Cry3 protein while at the same time being tolerant to glyphosate.

Crops are also to be understood to include those which are obtained by conventional methods of breeding or genetic engineering and contain so-called output traits (e.g. improved storage stability, higher nutritional value and improved flavour).

Other useful plants include turf grass for example in golf-courses, lawns, parks and roadsides, or grown commercially for sod, and ornamental plants such as flowers or bushes.

The compositions can be used to control unwanted plants (collectively, 'weeds'). The weeds to be controlled include both monocotyledonous (e.g. grassy) species, for example: *Agrostis, Alopecurus, Avena, Brachiaria, Bromus, Cenchrus, Cyperus, Digitaria, Echinochloa, Eleusine, Lolium, Monochoria, Rottboellia, Sagittaria, Scirpus, Setaria and Sorghum;* and dicotyledonous species, for example: *Abutilon, Amaranthus, Ambrosia, Chenopodium, Chrysanthemum, Conyza, Galium, Ipomoea, Kochia, Nasturtium,* *Polygonum, Sida, Sinapis, Solanum, Stellaria, Veronica, Viola* and *Xanthium.* Weeds can also include plants which may be considered crop plants but which are growing outside a crop area ('escapes'), or which grow from seed left over from a previous planting of a different crop ('volunteers'). Such volunteers or escapes may be tolerant to certain other herbicides.

Preferably the weeds to be controlled and/or growth-inhibited, include monocotyledonous weeds, more preferably grassy monocotyledonous weeds, in particular those from the following genus: *Agrostis, Alopecurus, Apera, Avena, Brachiaria, Bromus, Cenchrus, Cyperus* (a genus of sedges), *Digitaria, Echinochloa, Eleusine, Eriochloa, Fimbristylis* (a genus of sedges), *Juncus* (a genus of rushes), *Leptochloa, Lolium, Monochoria, Ottochloa, Panicum, Pennisetum, Phalaris, Poa, Rottboellia, Sagittaria, Scirpus* (a genus of sedges), *Setaria* and/or *Sorghum,* and/or volunteer corn (volunteer maize) weeds; in particular: *Alopecurus myosuroides* (ALOMY, English name "blackgrass"), *Apera spica-venti, Avena fatua* (AVEFA, English name "wild oats"), *Avena ludoviciana, Avena sterilis, Avena sativa* (English name "oats" (volunteer)), *Brachiaria decumbens, Brachiaria plantaginea, Brachiaria platyphylla* (BRAPP), *Bromus tectorum, Digitaria horizontalis, Digitaria insularis, Digitaria sanguinalis* (DIGSA), *Echinochloa crusgalli* (English name "common barnyard grass", ECHCG), *Echinochloa oryzoides, Echinochloa colona or colonum, Eleusine indica, Eriochloa villosa* (English name "woolly cupgrass"), *Leptochloa chinensis, Leptochloa panicoides, Lolium perenne* (LOLPE, English name "perennial ryegrass"), *Lolium multiflorum* (LOLMU, English name "Italian ryegrass"), *Lolium persicum* (English name "Persian darnel"), *Lolium rigidum, Panicum dichotomiflorum* (PANDI), *Panicum miliaceum* (English name "wild proso millet"), *Phalaris minor, Phalaris paradoxa, Poa annua* (POAAN, English name "annual bluegrass"), *Scirpus maritimus, Scirpus juncoides, Setaria viridis* (SETVI, English name "green foxtail"), *Setaria faberi* (SETFA, English name "giant foxtail"), *Setaria glauca, Setaria lutescens* (English name "yellow foxtail"), *Sorghum bicolor,* and/or *Sorghum halepense* (English name "Johnson grass"), and/or *Sorghum vulgare;* and/or volunteer corn (volunteer maize) weeds.

In one embodiment, grassy monocotyledonous weeds to be controlled comprise weeds from the genus: *Agrostis, Alopecurus, Apera, Avena, Brachiaria, Bromus, Cenchrus, Digitaria, Echinochloa, Eleusine, Eriochloa, Leptochloa, Lolium, Ottochloa, Panicum, Pennisetum, Phalaris, Poa, Rottboellia, Setaria* and/or *Sorghum,* and/or volunteer corn (volunteer maize) weeds; in particular: weeds from the genus *Agrostis, Alopecurus, Apera, Avena, Brachiaria, Bromus, Cenchrus, Digitaria, Echinochloa, Eleusine, Eriochloa, Leptochloa, Lolium, Panicum, Phalaris, Poa, Rottboellia, Setaria,* and/or *Sorghum,* and/or volunteer corn (volunteer maize) weeds.

In a further embodiment, the grassy monocotyledonous weeds are "warm-season" (warm climate) grassy weeds; in which case they preferably comprise (e.g. are): weeds from the genus *Brachiaria, Cenchrus, Digitaria, Echinochloa, Eleusine, Eriochloa, Leptochloa, Ottochloa, Panicum, Pennisetum, Phalaris, Rottboellia, Setaria* and/or *Sorghum,* and/or volunteer corn (volunteer maize) weeds. More preferably, the grassy monocotyledonous weeds, e.g. to be controlled and/or growth-inhibited, are "warm-season" (warm climate) grassy weeds comprising (e.g. being): weeds from the genus *Brachiaria, Cenchrus, Digitaria, Echinochloa, Eleusine, Eriochloa, Panicum, Setaria* and/or *Sorghum,* and/or volunteer corn (volunteer maize) weeds.

In another particular embodiment the grassy monocotyledonous weeds, are "cool-season" (cool climate) grassy weeds; in which case they typically comprise weeds from the genus *Agrostis, Alopecurus, Apera, Avena, Bromus, Lolium* and/or *Poa*.

Various aspects and embodiments of the present invention will now be illustrated in more detail by way of example. It will be appreciated that modification of detail may be made without departing from the scope of the invention.

### PREPARATION EXAMPLES

Those skilled in the art will appreciate that depending on the nature of the substituents X¹, R¹, R², R³, R⁴, R⁵, R⁶, R⁷, R⁸, R⁹, R¹⁰, R¹¹, R^{a}, R^{b}, R^{c}, n, p, q, r, and s, compounds of Formula I may exist in different interconvertible rotameric forms as described in, for example S.A. Richards and J.C. Hollerton, Essential Practical NMR for Organic Chemistry, John Wiley and sons (2010). For clarity, only the spectroscopic data for the major rotameric form is quoted.

### General Methods

[Pd(IPr*)(cin)Cl] refers to chlorophenylallyl[1,3-bis[2,6-bis(diphenylmethyl)-4-methylphenyl-imidazol-2-ylidene]palladium(II) [1380314-24-8] see Chem. Eur. J. 2012, 18, 4517.

JackiePhos Pd G3 refers to methanesulfonato[2-bis(3,5-di(trifluoromethyl)phenylphosphino)-3,6-dimethoxy-2',4',6'-tri-i-propyl-1,1'-biphenyl](2'-amino-1,1'-biphenyl-2-yl)palladium(II) - see J. Am. Chem. Soc., 2009, 131, 16720.

### EXAMPLE P1: Synthesis of 2-methyl-N-(4-methyl-2-pyrimidin-5-yl-pyrimidin-5-yl)propanamide (compound F1) and 2-methyl-N-(2-methylpropanoyl)-N-(4-methyl-2-pyrimidin-5-yl-pyrimidin-5-yl)propanamide (compound F2)

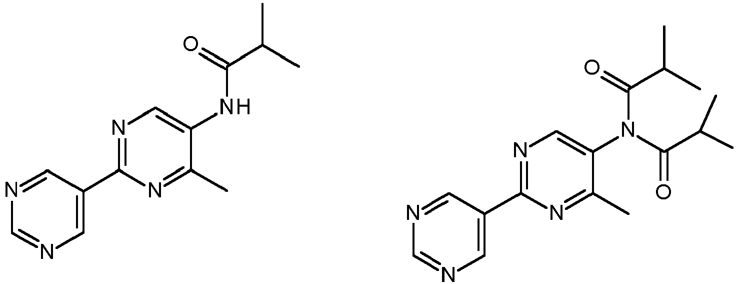

### Step 1: Synthesis of tert-butyl N-(2-chloro-4-methyl-pyrimidin-5-yl)carbamate

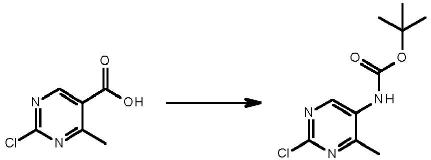

To a stirred solution of 2-chloro-4-methyl-pyrimidine-5-carboxylic acid (500 mg, 2.90 mmol) and triethylamine (0.525 mL, 3.77 mmol) in tert-butanol (25 mL) was added diphenylphosphoryl azide (0.81 mL, 3.77 mmol). The reaction mixture heated to 90°C for 4 hours and then allowed to cool to RT overnight. The reaction mixture was diluted with water (100 mL) and extracted with EtOAc (3 x 25 mL). The combined organic extracts were washed with brine (20 mL), dried over MgSO₄ and evaporated to dryness under reduced pressure to give a yellow oil. The crude product was purified by flash chromatography on silica gel using an EtOAc/isohexane gradient as eluent to give the desired product (527mg, 75%) as a white solid.
¹H NMR (400MHz, CDCl₃) δ = 9.03 (br s, 1H), 6.42 (br s, 1H), 2.50 (s, 3H), 1.53 (s, 9H).

### Step 2: Synthesis of tert-butyl N-(4-methyl-2-pyrimidin-5-yl-pyrimidin-5-yl)carbamate

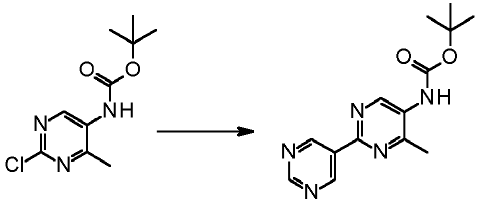

A mixture of tert-butyl N-(2-chloro-4-methyl-pyrimidin-5-yl)carbamate (1.93 g, 7.92 mmol), pyrimidin-5-ylboronic acid (1.47g, 11.9 mmol), K₂CO₃ (2.41g, 17.4 mmol) and [Pd(IPr*)(cin)Cl) (0.464g, 0.40 mmol) in EtOH (40 mL) was heated at 80°C for 1.5 hours. The reaction was cooled to RT, filtered through celite, washed through with EtOH and evaporated to dryness under reduced pressure to give an orange-brown gum. The crude product was purified by flash chromatography on silica gel using an EtOAc/isohexane gradient as eluent to give the desired product (1.69g, 74%) as a pale yellow solid.
¹H NMR (400MHz, CDCl₃) δ = 9.65 (s, 2H), 9.27 (s, 1H), 9.25 (br s, 1H), 6.38 (br s, 1H), 2.58 (s, 3H), 1.56 (s, 9H).

### Step 3: Synthesis of 4-methyl-2-pyrimidin-5-yl-pyrimidin-5-amine

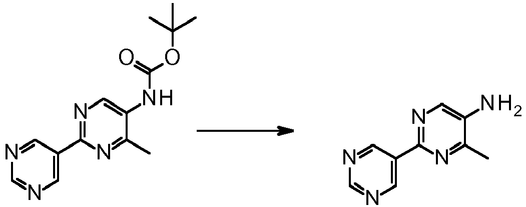

To a stirred solution of tert-butyl N-(4-methyl-2-pyrimidin-5-yl-pyrimidin-5-yl)carbamate (400mg, 1.39mmol) in DCM (5 mL) was added trifluoroacetic acid (0.53 mL, 6.96mmol) and the reaction was stirred at RT overnight. Further trifluoroacetic acid (0.53 mL) was added and the reaction was heated at reflux for 4 hours. The reaction was cooled to RT and evaporated to dryness. The crude product was purified by flash chromatography on silica gel using an EtOAc/isohexane gradient as eluent to give the desired product (233mg, 89%) as a pale yellow solid.
¹H NMR (400MHz, CDCl₃) δ = 9.59 (s, 2H), 9.22 (s, 1H), 8.17 (s, 1H), 3.85 (br s, 2H), 2.49 (s, 3H).

### Step 4: Synthesis of 2-methyl-N-(4-methyl-2-pyrimidin-5-yl-pyrimidin-5-yl)propanamide (compound F1) 2-methyl-N-(2-methylpropanoyl)-N-(4-methyl-2-pyrimidin-5-yl-pyrimidin-5-yl)propanamide (compound F2)

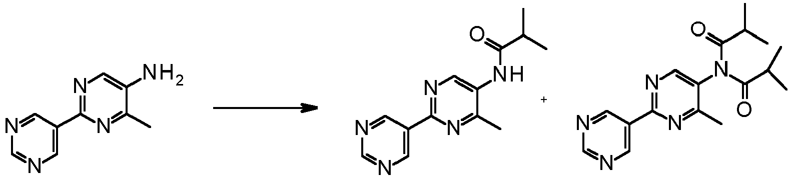

To a stirred suspension of 4-methyl-2-pyrimidin-5-yl-pyrimidin-5-amine (139 mg, 0.74 mmol) and pyridine (0.24 mL, 2.97 mmol) in dichloromethane (3 mL) was added 2-methylpropanoyl chloride (0.16 mL, 1.49 mmol). The reaction mixture was allowed to stir at room temperature for 20 hours. The reaction mixture was evaporated to dryness and purified by flash chromatography on silica gel using a gradient from 5-100% EtOAc/isohexane as eluent to give **F1** (130mg, 68%) as a white solid and **F2** (48mg, 20%) as a colourless oil.
**F1** ¹H NMR (400MHz, CDCl₃) δ 9.68 (s, 2H), 9.29 (s, 2H), 7.02 (br s, 1H), 2.70-2.61 (m, 1H), 2.59 (s, 3H), 1.32 (d, 6H)
**F2** ¹H NMR (400MHz, CDCl₃) δ 9.73 (s, 2H), 9.35 (s, 1H), 8.49 (s, 1H), 3.09-2.99 (m, 2H), 2.48 (s, 3H), 1.26-1.13 (m, 12H)

### EXAMPLE P2: Synthesis of N-[4-tert-butyl-2-(5-fluoro-3-pyridyl)pyrimidin-5-yl]-2-methyl-propanamide (compound F13)

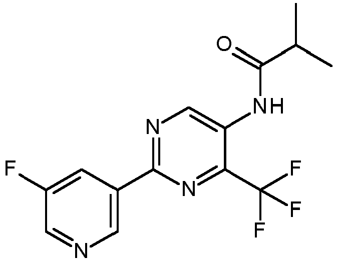

### Step 1: Synthesis of 5-chloro-2-methylsulfanyl-4-(trifluoromethyl)pyrimidine

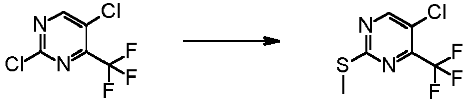

To a stirred suspension of NaSMe (0.17g, 2.42 mmol) in MeOH (5 mL) at RT was added 2,5-dichloro-4-(trifluoromethyl)pyrimidine (0.50g, 2.30 mmol). The reaction was heated at reflux for 2 ¼ hours, allowed to cool to RT and then evaporated to dryness under reduced pressure to give a pale yellow paste. The crude material was dissolved in EtOAc (20 mL) and washed with H₂O (3 x 20 mL). The organic phase was then dried over MgSO₄ and evaporated to dryness under reduced pressure to give a pale yellow oil. The crude product was purified by flash chromatography on silica gel using an EtOAc/isohexane gradient as eluent to give the desired product (0.419g, 80%) as a colourless oil.
¹H NMR (400 MHz, CDCl₃) δ 8.66 (s, 1H), 2.60 (s, 3H).

### Step 2: Synthesis of 5-chloro-2-(5-fluoro-3-pyridyl)-4-(trifluoromethyl)pyrimidine

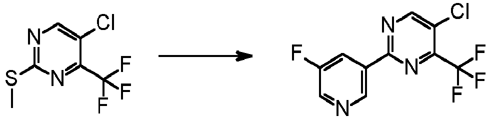

A microwave vial was charged with 5-chloro-2-methylsulfanyl-4-(trifluoromethyl)pyrimidine (750mg, 3.28 mmol), (5-fluoro-3-pyridyl)boronic acid (693mg, 4.92 mmol), tris(2-furyl)phosphane (122mg, 0.525 mmol), copper(I) 3-methylsalicylate (1.76g, 8.20 mmol), Pd₂dba₃ (120mg, 0.131 mmol) and anhydrous THF (20 mL) (pre-sparged with N₂ for 30 min) and heated at 100°C for 1 hour under microwave irradiation. The reaction mixture was evaporated to dryness under reduced pressure and the residue was taken up in Et₂O (200 mL) and washed with aq. NH₄OH (2:1 conc.:water, 3 x 200mL) and brine (200mL). The organic phase was dried over MgSO₄ and evaporated to dryness under reduced pressure. The crude product was purified twice by flash chromatography on silica gel, first with an EtOAc/isohexane gradient as eluent followed by a 0-10% MeOH/DCM gradient as eluent to give the desired product (603mg, 66%) as a crystalline pale yellow solid.
¹H NMR (400 MHz, CDCl₃): δ 9.49 (s, 1H), 9.01 (s, 1H), 8.63 (d, 1H), 8.47-8.39 (m, 1H).

### Step 3: Synthesis of N-[4-tert-butyl-2-(5-fluoro-3-pyridyl)pyrimidin-5-yl]-2-methylpropanamide (compound F13)

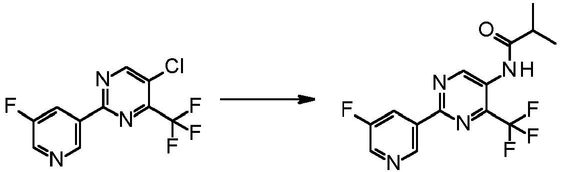

A microwave vial was charged with 5-chloro-2-(5-fluoro-3-pyridyl)-4-(trifluoromethyl)pyrimidine (120mg, 0.432 mmol), 2-methylpropanamide (94mg, 1.08mmol), JackiePhos Pd G3 (20mg, 0.017 mmol), Cs₂CO₃ (282mg, 0.865 mmol) and anhydrous toluene (1 mL). The reaction mixture was degassed by evacuating then purging with nitrogen (x3) and then heated at 150°C for 1 hour under microwave irradiation. The reaction mixture was evaporated to dryness and purified by flash chromatography on silica gel using an EtOAc/isohexane gradient as eluent to give the desired compound (127mg, 90%) as an off-white solid.
¹H NMR (400 MHz, CDCl₃): δ 9.92 (s, 1H), 9.48 (s, 1H), 8.62-8.57 (m, 1H), 8.44-8.38 (m, 1H), 7.52 (br s, 1H), 2.72-2.61 (m, 1H), 1.32 (d, 6H).

### EXAMPLE P3: Synthesis of N-[2-(5-fluoro-3-pyridyl)-4-(trifluoromethyl) pyrimidin-5-yl]-N,2-dimethyl-propanamide (compound F20)

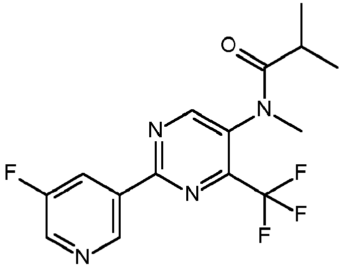

### Step 1: Synthesis of N-[2-(5-fluoro-3-pyridyl)-4-(trifluoromethyl)pyrimidin-5-yl]-N,2-dimethyl-propanamide (compound F20)

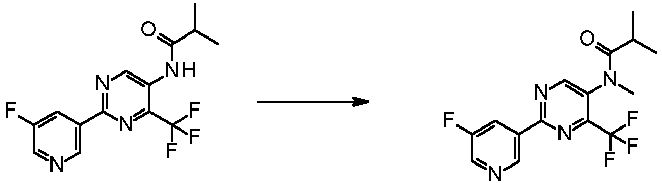

To a stirred solution of N-[2-(5-fluoro-3-pyridyl)-4-(trifluoromethyl)pyrimidin-5-yl]-2-methyl-propanamide (85 mg, 0.26 mmol) in N,N-dimethylformamide (2 mL) at RT under an N₂ atmosphere was added portionwise NaH (60% dispersion in mineral oil) (11mg, 0.28 mmol). The reaction was stirred for 1hr, then iodomethane (0.1 mL, 2 mmol) was added and the mixture allowed to stir for 2.5hrs. The reaction mixture was carefully quenched with water (10 mL) and extracted with Et₂O (3 x 15 mL). The combined organic extracts were washed with brine (10 mL), dried over MgSO₄ and evaporated to dryness under reduced pressure to give a brown oil. The crude product was purified by flash chromatography on silica gel using a gradient from 5-100% ethyl acetate in isohexane as eluent to give the desired product (54mg, 61%) as a yellow gum.
¹H NMR (400 MHz, CDCl₃) major rotamer δ 9.48 (s, 1H), 8.82 (s, 1H), 8.59 (d, 1H), 8.44-8.35 (m, 1H), 3.20 (s, 3H), 2.18-2.05 (m, 1H), 1.08-0.95 (m, 6H).

### EXAMPLE P4: Synthesis of N-[2-(5-fluoro-3-pyridyl)-4-(trifluoromethyl)-pyrimidin-5-yl]cyclopropanecarboxamide (compound F14).

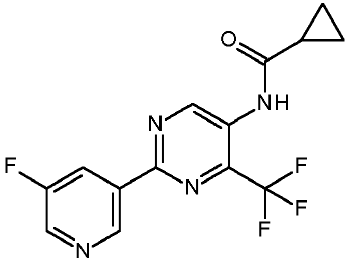

### Step 1: Synthesis of ethyl (2E/Z)-2-(ethoxymethylene)-4,4,4-trifluoro-3-oxo-butanoate

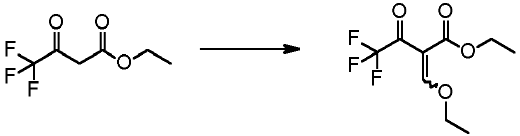

A mixture of acetic anhydride (30.8 mL, 325.9mmol), triethyl orthoformate (36.1 mL, 217.3 mmol) and ethyl 4,4,4-trifluoro-3-oxo-butanoate (15.89 mL, 108.6mmol) was heated at reflux for 6 hours and then allowed to cool to RT. The excess reagents were removed by distillation under reduced pressure to leave the desired product as a mixture of E/Z isomers (23.2g, 89%) as an orange oil.
¹H NMR (400MHz, CDCl₃) δ 7.83 and 7.72 (2 x s, 1H), 4.40-4.20 (m, 4H), 1.49-1.22 (m, 3H).

### Step 2: Synthesis of (5-fluoropyridine-3-carboximidoyl)ammonium chloride

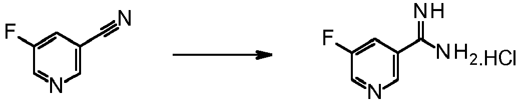

To a stirred solution of 5-fluoropyridine-3-carbonitrile (2.0 g, 16.38 mmol) in methanol (20 mL) at RT was added NaOMe (88mg, 1.64 mmol) and the reaction stirred at RT overnight. Ammonium chloride (1.40g, 26.21 mmol) was added in a single portion and the reaction mixture stirred overnight at RT. The reaction mixture was filtered and the filtrate concentrated to dryness under reduced pressure. The residue was suspended in EtOH (50 mL) and then heated at reflux. The undissolved solid was filtered off and the filtrate concentrated to 1/3 of its volume and then left to stand at RT. The resultant crystals were filtered off, washed with EtOH and air-dried to give the desired product (2.11 g, 73%) as white crystals.
¹H NMR (400 MHz, d6-DMSO) δ 8.93 (d, 1H), 8.88 (s, 1H), 8.29-8.23 (m, 1H).

### Step 3: Synthesis of ethyl 2-(5-fluoro-3-pyridyl)-4-(trifluoromethyl)pyrimidine-5-carboxylate

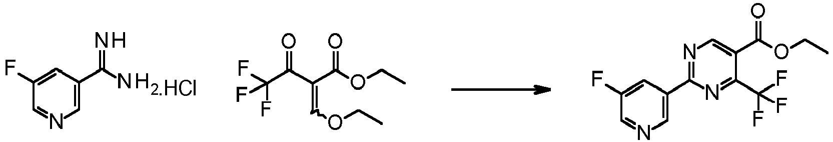

To a stirred solution of (5-fluoropyridine-3-carboximidoyl)ammonium chloride (2.0g, 11.4 mmol) and ethyl (2E/Z)-2-(ethoxymethylene)-4,4,4-trifluoro-3-oxo-butanoate (2.74g, 11.4 mmol) in EtOH (40 mL) was added NaOEt (1.16g, 17.1 mmol). The reaction was heated at reflux for 2hrs and then further NaOEt (155mg, 0.2 equiv) was added, the reaction mixture heated at reflux for a further 1hr and then allowed to cool to RT overnight. The reaction mixture was evaporated to dryness under reduced pressure and the residue partitioned between water (25 mL) and extracted with EtOAc (3 x 20 mL). The combined organic extracts were washed with brine (20 mL), dried over MgSO₄ and evaporated to dryness under reduced pressure to give an orange oil. The crude product was purified by flash chromatography on silica gel using a gradient of 5-25% ethyl acetate in isohexane as eluent to give the desired product (2.15g, 60%) as an off-white solid.
¹H NMR (400 MHz, CDCl₃) δ 9.57 (s, 1H), 9.32 (s, 1H), 8.66 (d, 1H), 8.52-8.47 (m, 1H), 4.49 (q, 2H), 1.44 (t, 3H).

### Step 4: Synthesis of 2-(5-fluoro-3-pyridyl)-4-(trifluoromethyl)pyrimidine-5-carboxylic acid

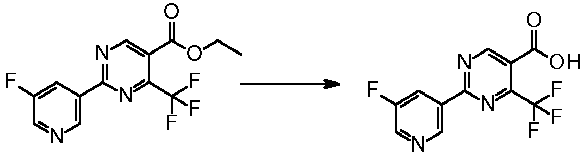

To a stirred solution of ethyl 2-(5-fluoro-3-pyridyl)-4-(trifluoromethyl)pyrimidine-5-carboxylate (2.15g, 6.82 mmol) in EtOH (60 mL) and water (20 mL) was added LiOH (0.49g, 20.5 mmol). The reaction was stirred at RT for 3 hours. The EtOH was removed under reduced pressure and the resulting residue diluted with water (30 mL), acidified with 2M HCl to pH 5 and extracted with EtOAc (3 x 25 mL). The combined organic extracts were washed with brine (15 mL), dried over MgSO₄ and evaporated to dryness under reduced pressure to give the desired product (1.34 g, 68%) as a white powder.
¹H NMR (400 MHz, d6-DMSO) δ 9.50 (s, 1H), 9.41 (s, 1H), 8.88 (s, 1H), 8.52-8.45 (m, 1H).

### Step 5: Synthesis of tert-butyl N-[2-(5-fluoro-3-pyridyl)-4-(trifluoromethyl)pyrimidin-5-yl]carbamate

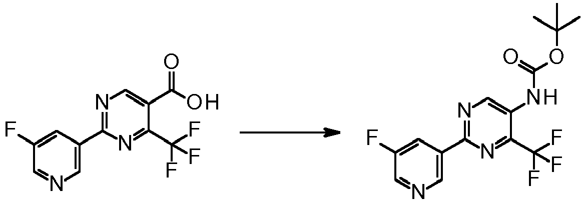

To a stirred solution of 2-(5-fluoro-3-pyridyl)-4-(trifluoromethyl)pyrimidine-5-carboxylic acid (1.30g, 4.53 mmol) and triethylamine (0.82 mL, 5.89 mmol) in tert-butanol (12 mL) and toluene (6mL) at reflux was added dropwise over 5 minutes a solution of diphenylphosphoryl azide (1.27 mL, 5.89 mmol) in toluene (6 mL). The reaction was heated at reflux for 3 hours, then allowed to cool to RT, diluted with EtOAc (60mL) and washed with brine (60mL). The aqueous layer was extracted with further EtOAc (2 x 100mL). The combined organic extracts were dried over MgSO₄ and evaporated to dryness under reduced pressure. The crude product was purified by flash chromatography on silica gel using an EtOAc/isohexane gradient as eluent to give the desired product (941 mg, 59%) as a colourless solid
¹H NMR (400 MHz, CDCl₃) δ 9.81 (s, 1H), 9.45 (s, 1H), 8.58 (d, 1H), 8.39 (d, 1H), 6.97 (br s, 1H), 1.58 (m, 9H)

### Step 6: Synthesis of 2-(5-fluoro-3-pyridyl)-4-(trifluoromethyl)pyrimidin-5-amine

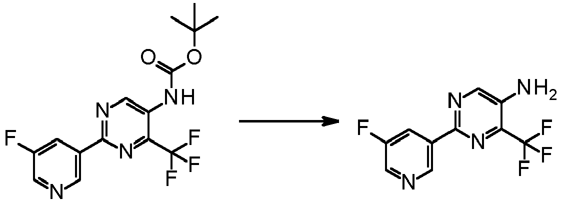

To a stirred solution of tert-butyl N-[2-(5-fluoro-3-pyridyl)-4-(trifluoromethyl)pyrimidin-5-yl]carbamate (0.94 g, 2.62 mmol) in DCM (10 mL) was added dropwise a solution of TFA (2.03 mL, 26.23 mmol) in DCM (10mL). The reaction mixture was heated at reflux for 5hrs and allowed to cool to RT. The reaction mixture was added slowly and portionwise to a stirred solution of saturated aqueous sodium bicarbonate solution (15 mL) and then extracted with DCM (5 x 20 mL). The combined organic extracts were dried and evaporated to dryness under reduced pressure to give the desired product (590 mg, 87%) as a pale yellow powder.
¹H NMR (400 MHz, CDCl₃) δ 9.37 (s, 1H), 8.53-8.46 (m, 2H), 8.30 (d,1H), 4.44 (br s, 2H).

### Step 7: Synthesis of N-[2-(5-fluoro-3-pyridyl)-4-(trifluoromethyl)pyrimidin-5-yl]cyclopropanecarboxamide (compound F14).

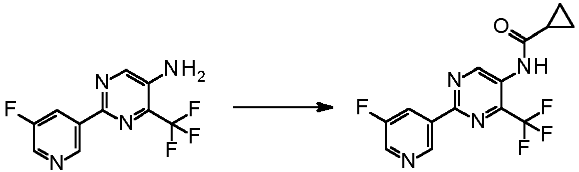

To a stirred suspension of 2-(5-fluoro-3-pyridyl)-4-(trifluoromethyl)pyrimidin-5-amine (0.54 g, 2.09 mmol) in DCM (11 mL) at 0°C was added pyridine (0.68 mL, 8.3664 mmol) followed by dropwise addition of cyclopropanecarbonyl chloride (0.39 mL, 4.18 mmol). The reaction was allowed to warm to RT, stirred for a further 1 hour then evaporated to dryness under reduced pressure. The crude product was purified by flash chromatography on silica gel using an EtOAc/isohexane gradient as eluent to give the desired product (360mg, 52%) as an off-white solid.
¹H NMR (400 MHz, CDCl₃) δ 9.92 (s, 1H), 9.48 (s, 1H), 8.61 (s, 1H), 8.42 (d, 1H), 7.69 (br s, 1H), 1.67-1.59 (m, 1H), 1.24-1.15 (m, 2H), 1.08-0.99 (m, 2H).

Further examples of the invention were made in an analogous manner using the methods described above in Examples P1 to P4, with respect to compounds F1, F2, F13, F14 and F20. Table 2 below, shows the structure of these compounds and the physical characterising data obtained using one or more of methods A to C as outlined below.

**Table 2: Physical data characteristic of the compounds of formula (I) made by the methods described above**

| **Cmpd ID** | **Structure** | **¹H NMR Data (400MHz, CDCl₃ unless stated)** |
|---|---|---|
| F1 | 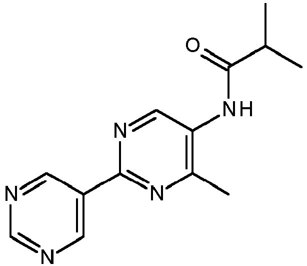 | 9.68 (s, 2H), 9.29 (s, 2H), 7.02 (br s, 1H), 2.70-2.61 (m, 1H), 2.59 (s, 3H), 1.32 (d, 6H) |
| F2 | 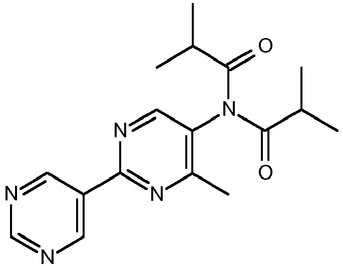 | 9.73 (s, 2H), 9.35 (s, 1H), 8.49 (s, 1H), 3.09-2.99 (m, 2H), 2.48 (s, 3H), 1.26-1.13 (m, 12H) |
| F3 | 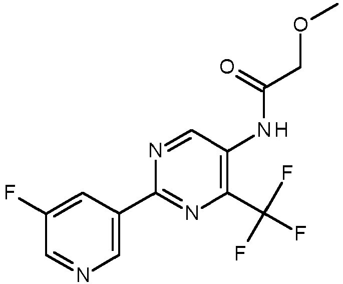 | 10.05 (s, 1H), 9.48 (br s, 1H), 8.95 (br s, 1H), 8.60 (br s, 1H), 8.41 (d, 1H), 4.12 (s, 2H), 3.57 (s, 3H). |
| F4 | 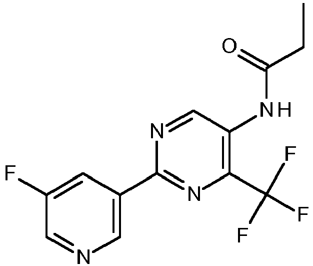 | 9.92 (s, 1H), 9.47 (s 1H), 8.60 (s, 1H), 8.40 (d, 1H), 7.48 (br s, 1H), 2.55 (q, 2H), 1.31 (t, 3H). |
| F5 | 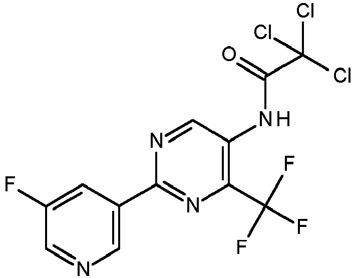 | 9.82 (s, 1H), 9.51 (s, 1H), 8.83 (br s, 1H), 8.63 (d, 1H), 8.47-8.42 (m, 1H). |
| F6 | 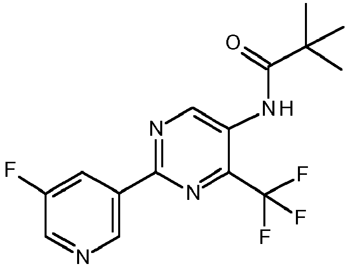 | 9.92 (s, 1H), 9.48 d,1H), 8.60 (d, 1H), 8.41 (d, 1H), 7.83 (br s, 1H), 1.36 (s, 9H) |
| F7 | 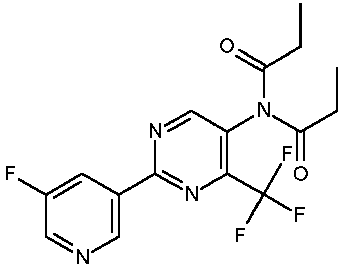 | 9.55 (s, 1H), 8.80 (s, 1H), 8.67 (d, 1H), 8.52-8.46 (m, 1H), 2.61 (q, 4H), 1.17 (t, 6H) |
| F8 | 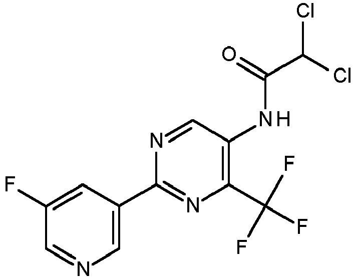 | 9.82 (s, 1H), 9.51 (s, 1H), 8.69-8.60 (m, 2H), 8.42 (d, 1H), 6.12 (s, 1H) |
| F9 | 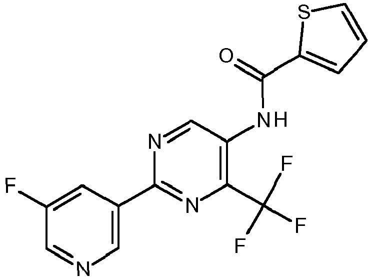 | 10.06 (s, 1H), 9.51 (br s, 1H), 8.62 (br s, 1H), 8.47-8.41 (m, 1H), 8.14 (br s, 1H), 7.73-7.67 (m, 2H), 7.25-7.21 (m, 1H) |
| F10 | 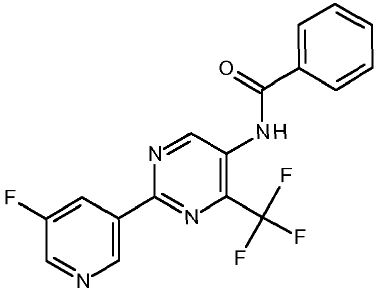 | 10.12 (s, 1H), 9.52 (br s, 1H), 8.63 (br s, 1H), 8.45 (d, 1H), 8.29 (br s, 1H), 7.91 (d, 2H), 7.67 (t, 1H), 7.59 (t, 2H) |
| F11 | 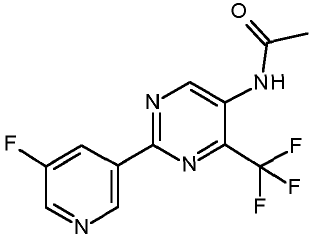 | 9.88 (s, 1H), 9.47 (s, 1H), 8.60 (d, 1H), 8.43-8.38 (m, 1H), 7.45 (br, 1H), 2.32 (s, 3H) |
| F12 | 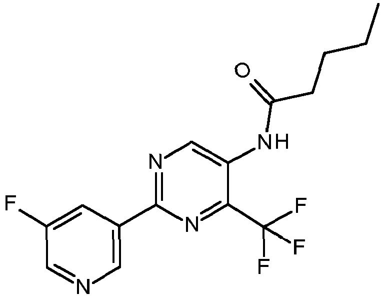 | 9.90 (s, 1H), 9.47 (s, 1H), 8.59 (d, 1H), 8.43-8.38 (m, 1H), 7.46 (br, 1H), 2.50 (t, 2H), 1.80-1.70 (m, 2H), 1.51-1.39 (m, 2H), 0.99 (t, 3H) |
| F13 | 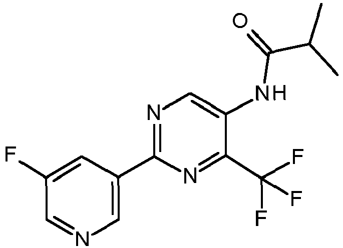 | 9.92 (s, 1H), 9.48 (s, 1H), 8.62-8.57 (m, 1H), 8.44-8.38 (m, 1H), 7.52 (br s, 1H), 2.72-2.61 (m, 1H), 1.32 (d, 6H) |
| F14 | 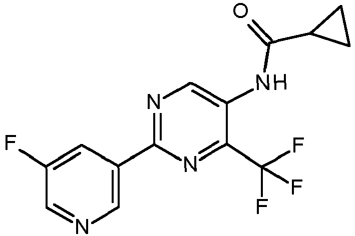 | 9.92 (s, 1H), 9.48 (s, 1H), 8.61 (s, 1H), 8.42 (d, 1H), 7.69 (br, 1H), 1.67-1.59 (m, 1H), 1.24-1.15 (m, 2H), 1.08-0.99 (m, 2H) |
| F15 | 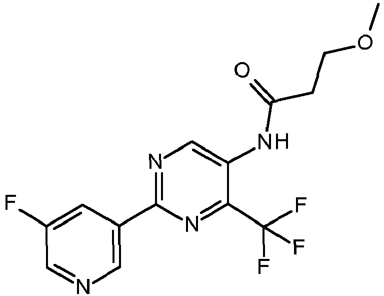 | 9.99 (s, 1H), 9.48 (s, 2H), 8.59 (d, 1H), 8.44-8.38 (m, 1H), 3.74 (t, 2H), 3.51 (s, 3H), 2.78 (t, 2H) |
| F16 | 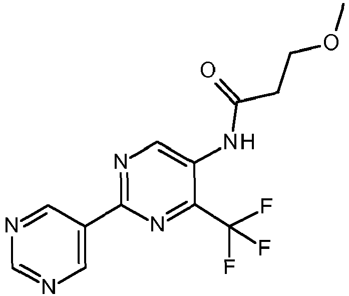 | 10.0 (s, 1H), 9.69 (s, 2H), 9.50 (br, 1H), 9.32 (s, 1H), 3.75 (t, 2H), 3.51 (s, 3H), 2.79 (t, 2H) |
| F17 | 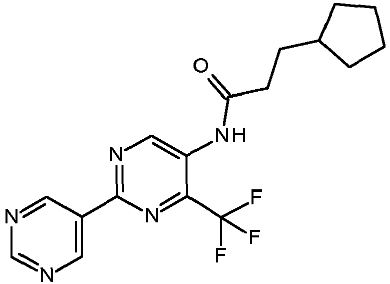 | 9.87 (s, 1H), 9.62 (s, 2H), 9.27 (s, 1H), 7.43 (br, 1H), 2.45 (t, 2H), 1.82-1.68 (m, 5H), 1.62-1.44 (m, 4H), 1.14-1.02 (m, 2H) |
| F18 | 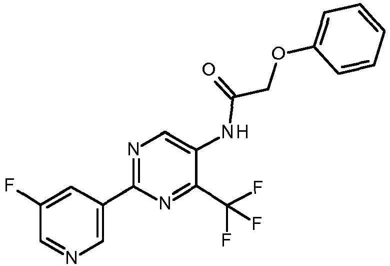 | 10.1 (s, 1H), 9.49 (s, 1H), 9.09 (s, 1H), 8.60 (d, 1H), 8.45-8.39 (m, 1H), 7.39 (t, 2H), 7.12 (t, 1H), 6.99 (d, 2H), 4.72 (s, 2H) |
| F19 | 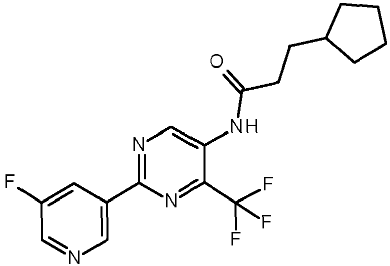 | 9.91 (s, 1H), 9.47 (s, 1H), 8.59 (d, 1H), 8.43-8.38 (m, 1H), 7.47 (br, 1H), 2.51 (t, 2H), 1.90-1.72 (m, 5H), 1.71-1.52 (m, 4H), 1.22-1.09 (m, 2H) |
| F20 | 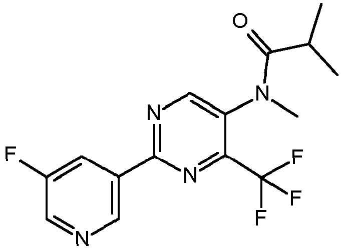 | Major rotamer 9.48 (s, 1H), 8.82 (s, 1H), 8.59 (d, 1H), 8.44-8.35 (m, 1H), 3.20 (s, 3H), 2.18-2.05 (m, 1H), 1.08-0.95 (m, 6H) |
| F21 | 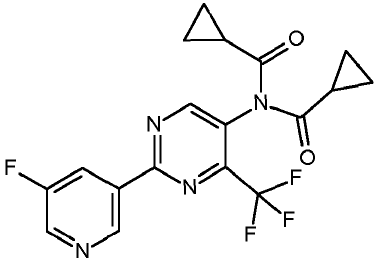 | (CD₃OD) 9.49 (s, 1H), 9.16 (s, 1H), 8.69 (d, 1H), 8.52-8.56 (m, 1H), 2.29-2.20 (m, 2H), 1.17-1.06 (m, 4H), 1.06-0.97 (m, 4H) |
| F22 | 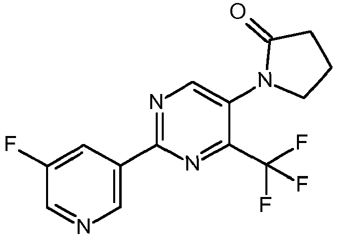 | 9.51 (s, 1H), 8.91 (s, 1H), 8.62 (d, 1H), 8.48-8.41 (m, 1H), 3.83 (t, 2H), 2.64 (t, 2H), 2.39-2.29 (m, 2H) |
| F23 | 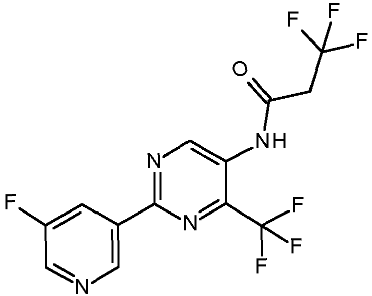 | 9.79 (s, 1H), 9.49 (s, 1H), 8.61 (d, 1H), 8.45-8.39 (m, 1H), 7.80 (br s, 1H), 3.41 (q, 2H) |
| F24 | 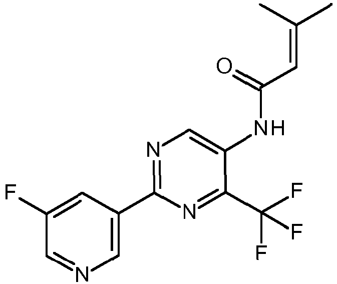 | 9.99 (s, 1H), 9.48 (s, 1H), 8.58 (d, 1H), 8.43-8.37 (m, 1H), 7.36 (br s, 1H), 5.78 (s, 1H), 2.28 (s, 3H), 2.00 (s, 3H) |
| F25 | 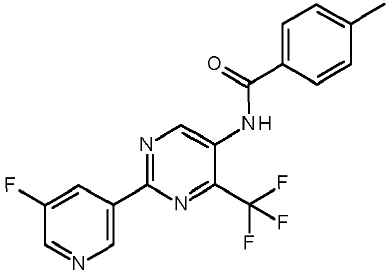 | 10.0 (s, 1H), 9.51 (s, 1H), 8.61 (d, 1H), 8.48-8.41 (m, 1H), 8.26 (br s, 1H), 7.79 (d, 2H), 7.38 (d, 2H), 2.49 (s, 3H) |
| F26 | 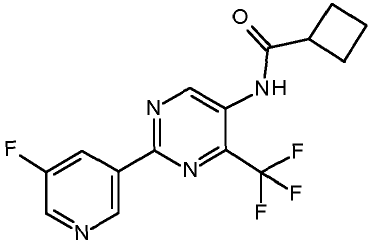 | 9.93 (s, 1H), 9.47 (s, 1H), 8.59 (d, 1H), 8.42-8.38 (m, 1H), 7.39 (br s, 1H), 3.34-3.24 (m, 1H), 2.49-2.29 (m, 4H), 2.15-1.91 (m, 2H) |
| F27 | 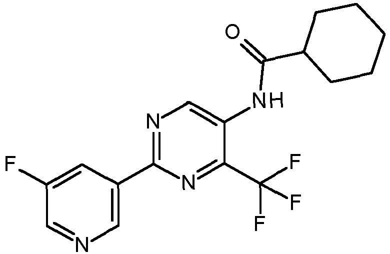 | 9.91 (s, 1H), 9.48 (s, 1H), 8.59 (d, 1H), 8.43-8.39 (m, 1H), 7.55 (br s, 1H), 2.42-2.32 (m, 1H), 2.05-1.99 (m, 2H), 1.93-1.84 (m, 2H), 1.79-1.71 (m, 1H), 1.60-1.49 (m, 2H), 1.44-1.29 (m, 3H) |
| F28 | 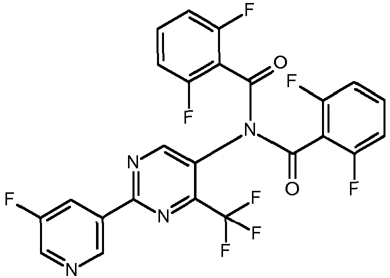 | 9.53 (s, 1H), 9.00 (s, 1H), 8.65 (d, 1H), 8.50-8.44 (m, 1H), 7.39-7.29 (m, 2H), 6.86 (t, 4H) |
| F29 | 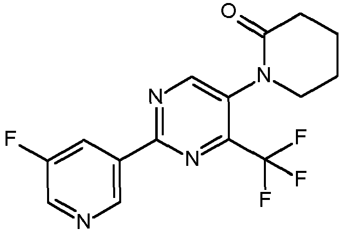 | 9.51 (s, 1H), 8.85 (s, 1H), 8.62 (d, 1H), 8.49-8.40 (m, 1H), 3.69-3.55 (m, 2H), 2.61 (t, 2H), 2.11-1.95 (m, 4H) |
| F30 | 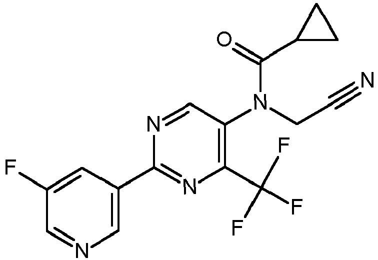 | 9.58 (s, 1H), 9.15 (s, 1H), 8.70 (d, 1H), 8.58-8.51 (m, 1H), 5.35 (d, 1H), 3.93 (d, 1H), 1.28-1.22 (m, 2H), 1.09-0.99 (m, 1H), 0.92-0.80 (m, 2H) |
| F31 | 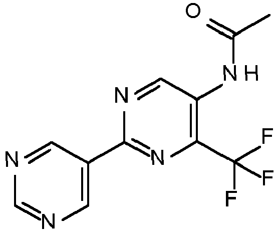 | 9.89 (s, 1H), 9.69 (s, 2H), 9.33 (s, 1H), 7.57 (br s, 1H), 2.33 (s, 3H) |
| F32 | 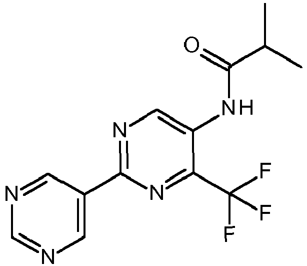 | 9.94 (s, 1H), 9.69 (s, 2H), 9.33 (s, 1H), 7.55 (br s, 1H), 2.72-2.62 (m, 1H), 1.32 (d, 6H) |
| F33 | 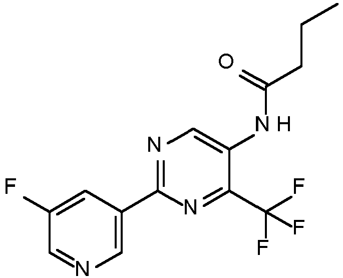 | 9.90 (s, 1H), 9.47 (s, 1H), 8.59 (d, 1H), 8.43-8.39 (m, 1H), 7.48 (br s, 1H), 2.49 (t, 2H), 1.87-1.75 (m, 2H), 1.05 (t, 3H) |

### Physical characterisation

Compounds of the invention were characterised using one or more of the following methods.

### NMR

NMR spectra contained herein were recorded on either a 400MHz Bruker AVANCE III HD equipped with a Bruker SMART probe or a 500MHz Bruker AVANCE III equipped with a Bruker Prodigy probe. Chemical shifts are expressed as ppm downfield from TMS, with an internal reference of either TMS or the residual solvent signals. The following multiplicities are used to describe the peaks: s = singlet, d = doublet, t = triplet, dd = double doublet, m = multiplet. Additionally br. is used to describe a broad signal and app. is used to describe and apparent multiplicity.

### LCMS

LCMS data contained herein consists of the molecular ion [MH+] and the retention time (tr) of the peak recorded on the chromatogram. The following instruments, methods and conditions were used to obtain LCMS data:

### Method A

*Instrumentation:* Waters Acquity UPLC-MS using a Sample Organizer with Sample Manager FTN, H-Class QSM, Column Manager, 2 x Column Manager Aux, Photodiode Array (Wavelength range (nm): 210 to 400, ELSD and SQD 2 equipped with a Waters HSS T3 C18 column (column length 30 mm, internal diameter of column 2.1 mm, particle size 1.8 micron). *Ionisation method:* Electrospray positive and negative: Capillary (kV) 3.00, Cone (V) 30.00, Source Temperature (°C) 500, Cone Gas Flow (L/Hr.) 10, Desolvation Gas Flow (L/Hr.) 1000. Mass range (Da): positive 95 to 800, negative 115 to 800.

The analysis was conducted using a two minute run time, according to the following gradient table at 40°C:

| **Time (mins)** | **Solvent A (%)** | **Solvent B (%)** | **Flow (ml / mn)** |
|---|---|---|---|
| 0.00 | 95.0 | 5.0 | 0.7 |
| 1.75 | 0.0 | 100 | 0.7 |
| 1.76 | 0.0 | 100 | 0.7 |
| 2.0 | 0.0 | 5.0 | 0.7 |
| 2.01 | 95.0 | 5.0 | 0.7 |
| 2.11 | 95.0 | 5.0 | 0.7 |

Solvent A: H₂O with 0.05% TFA
Solvent B: CH₃CN with 0.05% TFA

### Method B (2 min method)

*Instrumentation:* Either (a) Waters Acquity UPLC system with Waters SQD2 single-quad MS detector, Photodiode Array Detector (Absorbance Wavelength: 254 nm, 10 pts/sec, Time Constant: 0.2000 sec), Charged Aerosol Detector (Corona) and Waters CTC 2770 auto-sampler unit (injection volume: 2 microliters, 1 min seal wash); or (b) Waters Acquity UPLC system with Waters QDa single-quad MS detector, Photodiode Array Detector (Absorbance Wavelength: 254 nm, 10 pts/sec, Time Constant: 0.2000 sec), Charged Aerosol Detector (Corona) and Waters CTC 2770 auto-sampler unit (injection volume: 2 microliters, 1 min seal wash).

### LC-Method:

Phenomenex 'Kinetex C18 100A' column (50 mm x 4.6 mm, particle size 2.6 micron), Flow rate: 2 mL/min at 313K (40 Celsius),

Gradient (Solvent A: H₂O with 0.1% Formic Acid; Solvent B: Acetonitrile with 0.1% Formic Acid):
The analysis was conducted using a two minute run time, according to the following gradient table at 40°C.

| **Time (mins)** | **Solvent A (%)** | **Solvent B (%)** | **Flow (ml / mn)** |
|---|---|---|---|
| Initial | 70.0 | 30.0 | 2.000 |
| 1.20 | 10.0 | 90.0 | 2.000 |
| 1.70 | 10.0 | 90.0 | 2.000 |
| 1.80 | 70.0 | 30.0 | 2.000 |
| 2.00 | 70.0 | 30.0 | 2.000 |
| 2.20 | 70.0 | 30.0 | 2.000 |

### Method C (1 min method)

*Instrumentation:* Either (a) Waters Acquity UPLC system with Waters SQD2 single-quad MS detector, Photodiode Array Detector (Absorbance Wavelength: 254 nm, 10 pts/sec, Time Constant: 0.2000 sec), Charged Aerosol Detector (Corona) and Waters CTC 2770 auto-sampler unit (injection volume: 2 microliters, 1 min seal wash); or (b) Waters Acquity UPLC system with Waters QDa single-quad MS detector, Photodiode Array Detector (Absorbance Wavelength: 254 nm, 10 pts/sec, Time Constant: 0.2000 sec), Charged Aerosol Detector (Corona) and Waters CTC 2770 auto-sampler unit (injection volume: 2 microliters, 1 min seal wash).

### LC-Method:

Phenomenex 'Kinetex C18 100A' column (50 mm x 4.6 mm, particle size 2.6 micron), Flow rate: 2 mL/min at 313K (40 Celsius),

Gradient (Solvent A: H₂O with 0.1% Formic Acid; Solvent B: Acetonitrile with 0.1% Formic Acid):
The analysis was conducted using a one minute run time, according to the following gradient table at 40°C.

| **Time (mins)** | **Solvent A (%)** | **Solvent B (%)** | **Flow (ml / mn)** |
|---|---|---|---|
| Initial | 60.0 | 40.0 | 2.000 |
| 0.80 | 0.0 | 100.0 | 2.000 |
| 0.95 | 0.0 | 100.0 | 2.000 |
| 1.00 | 60.0 | 40.0 | 2.000 |
| 1.10 | 60.0 | 40.0 | 2.000 |
| 1.25 | 60.0 | 40.0 | 2.000 |

### BIOLOGICIAL EXAMPLES

### B1 Pre-emergence herbicidal activity

Seeds of a variety of test species were sown in standard soil in pots: *Triticum aestivium* (TRZAW), *Avena fatua* (AVEFA), *Alopecurus myosuroides* (ALOMY), *Echinochloa crus-galli* (ECHCG), *Lolium perenne* (LOLPE), and *Setaria faberi* (SETFA). After cultivation for one day (pre-emergence) under controlled conditions in a glasshouse (at 24/16°C, day/night; 14 hours light; 65% humidity), the plants were sprayed with an aqueous spray solution derived from the formulation of the technical active ingredient in acetone / water (50:50) solution containing 0.5% Tween 20 (polyoxyethelyene sorbitan monolaurate, CAS RN 9005-64-5). The test plants were then grown in a glasshouse under controlled conditions (at 24/16°C, day/night; 14 hours light; 65% humidity) and watered twice daily. After 13 days, the test was evaluated (5= total damage to plant; 0 = no damage to plant). Results are shown in Table B1a.

**Table B1a Control of weed species by compound of Formula (I) after pre-emergence application**

| **Compound ID** | **Rate (g/ha)** | **ECHCG** | **LOLPE** | **SETFA** | **AVEFA** | **ALOMY** | **TRAZW** |
|---|---|---|---|---|---|---|---|
| F1 | 1000 | 3 | 0 | 5 | 2 | 0 | 0 |
| F2 | 1000 | 4 | 0 | 5 | 2 | 0 | 0 |
| F3 | 1000 | 3 | 1 | 3 | 2 | 0 | 0 |
| F4 | 1000 | 3 | 0 | 4 | 3 | 1 | 0 |
| F5 | 1000 | 3 | 0 | 5 | 1 | 0 | 0 |
| F6 | 1000 | 4 | 1 | 3 | 2 | 0 | 0 |
| F7 | 1000 | 2 | 1 | 2 | 1 | 0 | 0 |
| F8 | 1000 | 4 | 1 | 4 | 1 | 0 | 1 |
| F9 | 1000 | 2 | 1 | 4 | 1 | 0 | 0 |
| F10 | 1000 | 4 | 1 | 4 | 1 | 0 | 0 |
| F11 | 1000 | 4 | 1 | NT | 2 | 0 | 0 |
| F12 | 1000 | 3 | 1 | NT | 2 | 0 | 0 |
| F13 | 1000 | 4 | 1 | NT | 2 | 0 | 0 |
| F14 | 1000 | 4 | 2 | NT | 2 | 0 | 0 |
| F15 | 1000 | 4 | 0 | NT | 2 | 0 | 0 |
| F16 | 1000 | 4 | 1 | 5 | 1 | 0 | 0 |
| F17 | 1000 | 3 | 0 | 4 | 1 | 0 | 0 |
| F18 | 1000 | 3 | 0 | 4 | 1 | 0 | 0 |
| F19 | 1000 | 4 | 1 | 4 | 1 | 0 | 1 |
| F20 | 1000 | 4 | 1 | 5 | 3 | 0 | 1 |
| F21 | 1000 | 1 | 0 | 4 | 0 | 0 | 0 |
| F22 | 1000 | 3 | 0 | 5 | 0 | 0 | 0 |
| F23 | 1000 | 3 | 0 | 5 | 0 | 0 | 0 |
| F24 | 1000 | 2 | 1 | 5 | 1 | 0 | 1 |
| F25 | 1000 | 3 | 0 | 4 | 0 | 0 | 0 |
| F26 | 1000 | 3 | 0 | 4 | 1 | 0 | 1 |
| F27 | 1000 | 0 | 0 | 0 | 0 | 0 | 0 |
| F28 | 1000 | 1 | 0 | 1 | 0 | 0 | 0 |
| F29 | 1000 | 2 | 1 | 3 | 0 | 1 | 1 |
| F30 | 1000 | 3 | 2 | 4 | 2 | 0 | 1 |
| F31 | 1000 | 4 | 1 | 4 | 2 | 1 | 1 |
| F32 | 1000 | 4 | 1 | 4 | 1 | 1 | 1 |
| F33 | 1000 | 4 | 0 | 4 | 1 | 0 | 1 |

### B2 Post-emergence herbicidal activity

Seeds of a variety of test species were sown in standard soil in pots: *Triticum aestivium* (TRZAW), *Avena fatua* (AVEFA), *Alopecurus myosuroides* (ALOMY), *Echinochloa crus-galli* (ECHCG), *Lolium perenne* (LOLPE), and *Setaria faberi* (SETFA). After 8 days cultivation (post-emergence) under controlled conditions in a glasshouse (at 24/16°C, day/night; 14 hours light; 65% humidity), the plants were sprayed with an aqueous spray solution derived from the formulation of the technical active ingredient in acetone / water (50:50) solution containing 0.5% Tween 20 (polyoxyethelyene sorbitan monolaurate, CAS RN 9005-64-5). The test plants were then grown in a glasshouse under controlled conditions (at 24/16°C, day/night; 14 hours light; 65% humidity) and watered twice daily. After 13 days, the test was evaluated (5 = total damage to plant; 0 = no damage to plant). Results are shown in Table B2a.

**Tables B2a Control of weed species by compound of Formula (I) after post-emergence application**

| **Compound ID** | **Rate (g/ha)** | **ECHCG** | **LOLPE** | **SETFA** | **AVEFA** | **ALOMY** | **TRAZW** |
|---|---|---|---|---|---|---|---|
| F1 | 1000 | 4 | 1 | NT | 3 | 0 | 0 |
| F2 | 1000 | 5 | 1 | NT | 3 | 0 | 0 |
| F3 | 1000 | 4 | 2 | 4 | 4 | 0 | 1 |
| F4 | 1000 | 4 | 2 | 4 | 4 | 0 | 1 |
| F5 | 1000 | 4 | 3 | 5 | 2 | 2 | 1 |
| F6 | 1000 | 5 | 2 | 4 | 3 | 1 | 1 |
| F7 | 1000 | 5 | 2 | 4 | 2 | 1 | 1 |
| F8 | 1000 | 4 | 2 | 5 | 2 | 1 | 1 |
| F9 | 1000 | 4 | 2 | 4 | 2 | 0 | 1 |
| F10 | 1000 | 5 | 1 | 5 | 2 | 0 | 1 |
| F11 | 1000 | 4 | 2 | 5 | 3 | 1 | 1 |
| F12 | 1000 | 4 | 2 | 5 | 3 | 0 | 0 |
| F13 | 1000 | 5 | 2 | 5 | 3 | 0 | 0 |
| F14 | 1000 | 5 | 4 | 5 | 3 | 0 | 1 |
| F15 | 1000 | 4 | 2 | 5 | 3 | 0 | 1 |
| F16 | 1000 | 5 | 2 | 5 | 3 | 1 | 1 |
| F17 | 1000 | 4 | 1 | 4 | 2 | 0 | 1 |
| F18 | 1000 | 4 | 1 | 4 | 3 | 0 | 1 |
| F19 | 1000 | 4 | 1 | 4 | 2 | 0 | 0 |
| F20 | 1000 | 5 | 3 | 5 | 4 | 1 | 2 |
| F21 | 1000 | 3 | 2 | 5 | 3 | 1 | 1 |
| F22 | 1000 | 5 | 1 | 5 | 3 | 0 | 1 |
| F23 | 1000 | 5 | 2 | 5 | 3 | 0 | 0 |
| F24 | 1000 | 5 | 1 | 4 | 3 | 1 | 1 |
| F25 | 1000 | 5 | 1 | 4 | 2 | 0 | 0 |
| F26 | 1000 | 5 | 2 | 5 | 4 | 1 | 1 |
| F27 | 1000 | 3 | 0 | 2 | 1 | 0 | 0 |
| F28 | 1000 | 2 | 1 | 1 | 0 | 0 | 0 |
| F29 | 1000 | 4 | 1 | 5 | 3 | 0 | 0 |
| F30 | 1000 | 4 | 2 | 5 | 2 | 1 | 1 |
| F31 | 1000 | 4 | 2 | 4 | 3 | 1 | 1 |
| F32 | 1000 | 4 | 2 | 4 | 3 | 1 | 1 |
| F33 | 1000 | 4 | 2 | 5 | 3 | 1 | 1 |

## Claims

1. A compound of Formula (I) 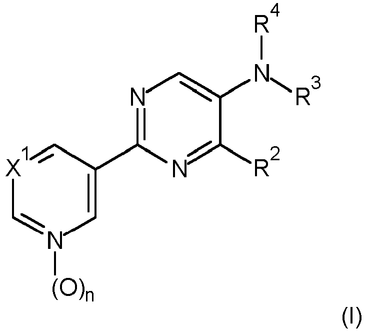 or a salt or N-oxide thereof, wherein,
X¹ is N or CR¹;
R¹ is selected from the group consisting of hydrogen, halogen, cyano, C₁-C₆alkyl, C₃-C₆cycloalkyl, C₂-C₆alkenyl, C₂-C₆alkynyl, C₁-C₆alkoxy, -C(O)OC₁-C₆alkyl, - S(O)ₚC₁-C₆alkyl, NR⁶R⁷, C₁-C₆haloalkoxy and C₁-C₆haloalkyl;
R² is selected from the group consisting of halogen, cyano, nitro, C₁-C₆alkyl, C₁-C₆haloalkyl, C₂-C₆alkenyl, C₂-C₆alkynyl, C₃-C₆cycloalkyl, -C(O)OC₁-C₆alkyl, - S(O)ₚ(C₁-C₆alkyl), C₁-C₆alkoxy and C₁-C₆haloalkoxy;
R³ is -C(O)R⁹;
R⁴ is selected from the group consisting of hydrogen, C₁-C₆alkyl, C₁-C₆haloalkyl, C₃-C₆alkenyl, C₃-C₆alkynyl, CᵣalkoxyCₛalkyl, - CᵣalkoxyCₛhaloalkyl, CᵣalkoxyCₛthioalkyl, -C(O)R⁹ and -(CR^{a}R^{b})_{q}R⁵;
each R⁸ is independently hydrogen or C₁-C₂ alkyl;
each R^{b} is independently hydrogen or C₁-C₂ alkyl;
R^{c} is hydrogen or C₁-C₄alkyl;
R⁵ is -C(O)OC₁-C₆alkyl, -C₃-C₆cycloalkyl, cyano, -NR⁶R⁷, -C(O)NR^{a}R^{b}, - S(O)ₚ(R¹¹)ₙ, -aryl or-heteroaryl wherein said aryl and heteroaryl are optionally substituted by 1 to 3 independent R⁸;
R⁶ and R⁷ are independently selected from the group consisting of hydrogen and C₁-C₆alkyl;
each R⁸ is independently selected from the group consisting of halogen, C₁-C₆ alkyl and C₁-C₆alkoxy-, C₁-C₆ haloalkyl, C₁-C₆ haloalkoxy-, cyano and S(O)ₚ(C₁-C₆alkyl);
each R⁹ is independently selected from the group consisting of hydrogen, C₁-C₆alkyl, CᵣalkoxyCₛalkyl, C₁-C₆haloalkyl, CᵣalkoxyCₛhaloalkyl, C₂-C₆alkenyl, C₂-C₆alkynyl, and -(CR^{a}R^{b})_{q}R¹⁰;
or R⁴ and R⁹ together with the atoms to which they are joined form a 5-7 membered ring system containing from 1 to 3 heteroatoms, wherein at least one heteratom is N, and any additional heteroatom is independently selected from S, O and N;
R¹⁰ is -C(O)OR^{c}, -OC(O)R^{c}, -C₃-C₆cycloalkyl, or an -aryl, -aryloxy, -heteroaryl, - heteroaryloxy or -heterocyclyl ring, wherein said ring is optionally substituted by 1 to 3 independent R⁸;
each n is independently 0 or 1;
p is 0, 1, or 2;
each q is independently 0, 1, 2, 3, 4, 5 or 6;
r is 1, 2, 3, 4, or 5, s is 1, 2, 3, 4, or 5, and the sum of r+s is less than or equal to 6; and
R¹¹ is C₁-C₆alkyl;
provided that the compound of formula (I) is not *N*-[4-chloro-2-(3-pyridyl)-pyrimidin-5-yl]-2,2,2-trifluoro-acetamide.

2. The compound of Formula (I) according to claim 1, wherein X¹ is N.

3. The compound of Formula (I) according to claim 1 wherein X¹ is CR¹ and R¹ is halogen or cyano.

4. The compound of Formula (I) according to any one of the preceding claims, wherein R² is halogen, cyano, C₁-C₆alkyl or C₁-C₆haloalkyl.

5. The compound of Formula (I) according to any one of the preceding claims, wherein in R³, R⁹ is C₁-C₆alkyl, C₁-C₃haloalkyl, C₁-C₃alkoxyC₁-C₃alkyl or - (CR^{a}R^{b})_{q}R¹⁰..

6. The compound of Formula (I) according to claim 5, wherein R¹⁰ is -C(O)OR^{c}, - OC(O)R^{c}, cyclopropyl, cyclobutyl, cyclopentyl, cyclohexyl, or a ring system selected from phenyl, phenoxy, pyridinyl, pyrimidinyl, thiazolyl, and thiophenyl, wherein said ring system is optionally substituted by 1-3 independent R⁸.

7. The compound of Formula (I) according to any one of the preceding claims, wherein R⁴ is selected from the group consisting of hydrogen, C₁-C₄alkyl, C₃-C₆alkenyl, CᵣalkoxyCₛalkyl, CᵣalkylthioCₛalkyl, C₃-C₆alkynyl, C₁-C₃haloalkyl, CᵣalkoxyCₛhaloalkyl, -C(O)R⁹, and -(CR^{a}R^{b})_{q}R⁵..

8. The compound of Formula (I) according to claim 7, wherein R⁴ is -C(O)R⁹, and said R⁹ is C₁-C₃alkyl, C₂-C₄alkenyl, or -(CR^{a}R^{b})_{q}R¹⁰.

9. The compound of Formula (I) according to claim 7, wherein R⁴ is -(CR^{a}R^{b})_{q}R⁵, and wherein in R⁴:
q is 1, 2, or 3;
R^{a} and R^{b} are independently hydrogen, methyl or ethyl; and,
R⁵ is -C(O)NR^{a}R^{b}, -NR⁶R⁷, cyano, -C₃-C₆cycloalkyl, -aryl or -heteroaryl, wherein said aryl and heteroaryl are optionally substituted by 1 to 3 independent R⁸.

10. The compound of Formula (I) according to any one of claims 1 to 4, wherein R⁴ and R⁹ together with the atoms to which they are joined form a 5-7 membered ring system containing from 1 to 3 heteroatoms, wherein at least one heteratom is N, and any additional heteroatom is independently selected from S, O and N.

11. A herbicidal composition comprising a compound of Formula (I) according to any one of the previous claims and an agriculturally acceptable formulation adjuvant.

12. A herbicidal composition according to claim 11, further comprising at least one additional pesticide.

13. A herbicidal composition according to claim 12, wherein the additional pesticide is a herbicide or herbicide safener.

14. A method of controlling weeds at a locus comprising application to the locus of a weed controlling amount of a compound according to any one of claims 1 to 10, or a weed controlling amount of a composition according to any one of claims 11 to 14.

15. Use of a compound of Formula (I) as defined in any one of claims 1 to 10 as a herbicide.

## Patentansprüche

1. Verbindung der Formel (I) 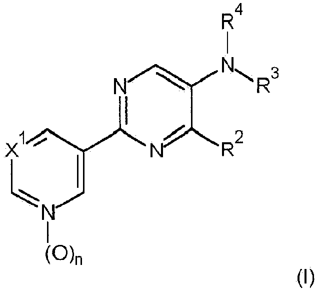 oder ein Salz oder N-Oxid davon, wobei:
X¹ für N oder CR¹ steht;
R¹ aus der Gruppe bestehend aus Wasserstoff, Halogen, Cyano, C₁-C₆-Alkyl, C₃-C₆-Cycloalkyl, C₂-C₆-Alkenyl, C₂-C₆-Alkinyl, C₁-C₆-Alkoxy, -C(O)O-C₁-C₆-Alkyl, -S(O)ₚ-C₁-C₆-Alkyl, NR⁶R⁷, C₁-C₆-Halogenalkoxy und C₁-C₆-Halogenalkyl ausgewählt ist;
R² aus der Gruppe bestehend aus Halogen, Cyano, Nitro, C₁-C₆-Alkyl, C₁-C₆-Halogenalkyl, C₂-C₆-Alkenyl, C₂-C₆-Alkinyl, C₃-C₆-Cycloalkyl, -C(O)O-C₁-C₆-Alkyl, -S(O)ₚ-C₁-C₆-Alkyl, C₁-C₆-Alkoxy und C₁-C₆-Halogenalkoxy ausgewählt ist;
R³ für -C(O)R⁹ steht;
R⁴ aus der Gruppe bestehend aus Wasserstoff, C₁-C₆-Alkyl, C₁-C₆-Halogenalkyl, C₃-C₆-Alkenyl, C₃-C₆-Alkinyl, Cᵣ-Alkoxy-Cₛ-alkyl, -Cᵣ-Alkoxy-Cₛ-halogenalkyl, Cᵣ-Alkoxy-Cₛ-thioalkyl, -C(O)R⁹ und -(CR^{a}R^{b})_{q}R⁵ ausgewählt ist;
R^{a} jeweils unabhängig für Wasserstoff oder C₁-C₂-Alkyl steht;
R^{b} jeweils unabhängig für Wasserstoff oder C₁-C₂-Alkyl steht;
R^{c} für Wasserstoff oder C₁-C₄-Alkyl steht;
R⁵ für -C(O)O-C₁-C₆-Alkyl, -C₃-C₆-Cycloalkyl, Cyano, -NR⁶R⁷, -C(O)NR^{a}R^{b}, -S(O)ₚ(R¹¹)ₙ, -Aryl oder -Heteroaryl steht, wobei das Aryl und Heteroaryl gegebenenfalls durch 1 bis 3 unabhängige R⁸ substituiert sind;
R⁶ und R⁷ unabhängig aus der Gruppe bestehend aus Wasserstoff und C₁-C₆-Alkyl ausgewählt sind;
R⁸ jeweils unabhängig aus der Gruppe bestehend aus Halogen, C₁-C₆-Alkyl und C₁-C₆-Alkoxy-, C₁-C₆-Halogenalkyl, C₁-C₆-Halogenalkoxy-, Cyano und S(O)ₚ-C₁-C₆-Alkyl ausgewählt ist;
R⁹ jeweils unabhängig aus der Gruppe bestehend aus Wasserstoff, C₁-C₆-Alkyl, Cᵣ-Alkoxy-Cₛ-alkyl, C₁-C₆-Halogenalkyl, Cᵣ-Alkoxy-Cₛ-halogenalkyl, C₂-C₆-Alkenyl, C₂-C₆-Alkinyl und -(CR^{a}R^{b})_{q}R¹⁰ ausgewählt ist;
oder R⁴ und R⁹ zusammen mit den Atomen, an die sie gebunden sind, ein 5-7-gliedriges Ringsystem bilden, das 1 bis 3 Heteroatome enthält, wobei mindestens ein Heteroatom N ist und jedes zusätzliche Heteroatom aus S, O und N ausgewählt ist;
R¹⁰ für -C(O)OR^{c}, -OC(O)R^{c}, -C₃-C₆-Cycloalkyl oder einen -Aryl-, -Aryloxy-, -Heteroaryl-, -Heteroaryloxy- oder -Heterocyclylring steht, wobei der Ring gegebenenfalls durch 1 bis 3 unabhängige R⁸ substituiert ist;
n jeweils unabhängig für 0 oder 1 steht;
p für 0, 1 oder 2 steht;
q jeweils unabhängig für 0, 1, 2, 3, 4, 5 oder 6 steht;
r für 1, 2, 3, 4 oder 5 steht, s für 1, 2, 3, 4 oder 5 steht und die Summe von r + s kleiner als oder gleich 6 ist; und
R¹¹ für C₁-C₆-Alkyl steht; mit der Maßgabe, dass es sich bei der Verbindung der Formel (I) nicht um *N-*[4-Chlor-2-(3-pyridyl)pyrimidin-5-yl]-2,2,2-tri-fluoracetamid handelt.

2. Verbindung der Formel (I) nach Anspruch 1, wobei X¹ für N steht.

3. Verbindung der Formel (I) nach Anspruch 1, X¹ für CR¹ steht und R¹ für Halogen oder Cyano steht.

4. Verbindung der Formel (I) nach einem der vorhergehenden Ansprüche, wobei R² für Halogen, Cyano, C₁-C₆-Alkyl oder C₁-C₆-Halogenalkyl steht.

5. Verbindung der Formel (I) nach einem der vorhergehenden Ansprüche, wobei R⁹ in R³ für C₁-C₆-Alkyl, C₁-C₃-Halogenalkyl, -C₁-C₃-Alkoxy-C₁-C₃-alkyl oder -(CR^{a}R^{b})_{q}R¹⁰ steht.

6. Verbindung der Formel (I) nach Anspruch 5, wobei R¹⁰ für -C(O)OR^{c}, -OC(O)R^{c}, Cyclopropyl, Cyclobutyl, Cyclopentyl, Cyclohexyl oder ein aus Phenyl, Phenoxy, Pyridinyl, Pyrimidinyl, Thiazolyl oder Thiophenyl ausgewähltes Ringsystem steht, wobei das Ringsystem gegebenenfalls durch 1-3 unabhängige R⁸ substituiert ist.

7. Verbindung der Formel (I) nach einem der vorhergehenden Ansprüche, wobei R⁴ aus der Gruppe bestehend aus Wasserstoff, C₁-C₄-Alkyl, C₃-C₆-Alkenyl, Cᵣ-Alkoxy-Cₛ-alkyl, Cᵣ-Alkylthio-Cₛ-alkyl, C₃-C₆-Alkinyl, C₁-C₃-Halogenalkyl, Cᵣ-Alkoxy-Cₛ-halogenalkyl, -C(O)R⁹ und -(CR^{a}R^{b})_{q}R⁵ ausgewählt ist.

8. Verbindung der Formel (I) nach Anspruch 7, wobei R⁴ für -C(O)R⁹ steht und das R⁹ für C₁-C₃-Alkyl, C₂-C₄-Alkenyl oder -(CR^{a}R^{b})_{q}R¹⁰ steht.

9. Verbindung der Formel (I) nach Anspruch 7, wobei R⁴ für -(CR^{a}R^{b})_{q}R⁵ steht und wobei in R⁴:
q für 1, 2 oder 3 steht;
R^{a} und R^{b} unabhängig für Wasserstoff, Methyl oder Ethyl stehen und
R⁵ für -C(O)NR^{a}R^{b}, -NR⁶R⁷, Cyano, -C₃-C₆-Cycloalkyl, -Aryl oder -Heteroaryl steht, wobei das Aryl und Heteroaryl gegebenenfalls durch 1 bis 3 unabhängige R⁸ substituiert sind.

10. Verbindung der Formel (I) nach einem der Ansprüche 1 bis 4, wobei R⁴ und R⁹ zusammen mit den Atomen, an die sie gebunden sind, ein 5-7-gliedriges Ringsystem bilden, das 1 bis 3 Heteroatome enthält, wobei mindestens ein Heteroatom N ist und jedes zusätzliche Heteroatom aus S, O und N ausgewählt ist.

11. Herbizide Zusammensetzung, umfassend eine Verbindung der Formel (I) nach einem der vorhergehenden Ansprüche und ein landwirtschaftlich unbedenkliches Formulierungshilfsmittel.

12. Herbizide Zusammensetzung nach Anspruch 11, ferner umfassend mindestens ein zusätzliches Pestizid.

13. Herbizide Zusammensetzung nach Anspruch 12, wobei es sich bei dem zusätzlichen Pestizid um ein Herbizid oder einen Herbizid-Safener handelt.

14. Verfahren zur Bekämpfung von Unkräutern an einem Standort, bei dem man eine unkrautbekämpfende Menge einer Verbindung der Formel (I) nach einem der Ansprüche 1 bis 10 oder eine unkrautbekämpfende Menge einer Zusammensetzung nach einem der Ansprüche 11 bis 14 auf den Standort ausbringt.

15. Verwendung einer Verbindung der Formel (I) gemäß einem der Ansprüche 1 bis 10 als Herbizid.

## Revendications

1. Composé de formule (I) 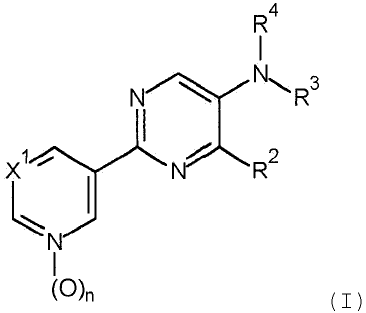 ou sel ou N-oxyde de celui-ci, dans lequel,
X¹ est N ou CR¹;
R¹ est choisi dans le groupe constitué d'hydrogène, halogène, cyano, alkyle en C₁-C₆, cycloalkyle en C₃-C₆, alcényle en C₂-C₆, alcynyle en C₂-C₆, alcoxy en C₁-C₆, -C(O)O(alkyle en C₁-C₆), -S(O)ₚ(alkyle en C₁-C₆), NR⁶R⁷, halogénoalcoxy en C₁-C₆ et halogénoalkyle en C₁-C₆ ; R² est choisi dans le groupe constitué d'halogène, cyano, nitro, alkyle en C₁-C₆, halogénoalkyle en C₁-C₆, alcényle en C₂-C₆, alcynyle en C₂-C₆, cycloalkyle en C₃-C₆, -C(O)O(alkyle en C₁-C₆), -S(O)ₚ(alkyle en C₁-C₆), alcoxy en C₁-C₆ et halogénoalcoxy en C₁-C₆ ;
R³ est -C(O)R⁹ ;
R⁴ est choisi dans le groupe constitué d'hydrogène, alkyle en C₁-C₆, halogénoalkyle en C₁-C₆, alcényle en C₃-C₆, alcynyle en C₃-C₆, (alcoxy en Cᵣ) - (alkyle en Cₛ), -(alcoxy en Cᵣ)- (halogénoalkyle en Cₛ), (alcoxy en Cᵣ)- (thioalkyle en Cₛ), -C(O)R⁹ et -(CR^{a}R^{b})_{q}R⁵;
chaque R^{a} est indépendamment hydrogène ou alkyle en C₁-C₂ ; chaque R^{b} est indépendamment hydrogène ou alkyle en C₁-C₂ ; R^{c} est hydrogène ou alkyle en C₁-C₄;
R⁵ est -C(O)O(alkyle en C₁-C₆), -(cycloalkyle en C₃-C₆), cyano, -NR⁶R⁷, -C(O)NR^{a}R^{b}, -S(O)ₚ(R¹¹)ₙ, -aryle ou -hétéroaryle dans lequel lesdits aryle et hétéroaryle sont facultativement substitués par 1 à 3 R⁸ indépendants ; R⁶ et R⁷ sont indépendamment choisis dans le groupe constitué d'hydrogène et alkyle en C₁-C₆ ;
chaque R⁸ est indépendamment choisi dans le groupe constitué d'halogène, alkyle en C₁-C₆ et (alcoxy en C₁-C₆)-, halogénoalkyle en C₁-C₆, (C₁-C₆ halogénoalcoxy-, cyano et S(O)ₚ(alkyle en C₁-C₆) ;
chaque R⁹ est indépendamment choisi dans le groupe constitué d'hydrogène, alkyle en C₁-C₆, (alcoxy en Cᵣ)-(alkyle en Cₛ), halogénoalkyle en C₁-C₆, (alcoxy en Cᵣ) - (halogénoalkyle en Cₛ), alcényle en C₂-C₆, alcynyle en C₂-C₆ et - (CR^{a}R^{b})_{q}R¹⁰ ;
ou R⁴ et R⁹, conjointement avec les atomes auxquels ils sont assemblés forment un système cyclique de 5 à 7 chaînons contenant de 1 à 3 hétéroatomes, dans lequel au moins un hétéroatome est N, et un hétéroatome supplémentaire quelconque est indépendamment choisi parmi S, O et N ;
R¹⁰ est -C(O)OR^{c}, -OC(O)R^{c}, -(cycloalkyle en C₃-C₆), ou un cycle -aryle, -aryloxy, -hétéroaryle, -hétéroaryloxy ou -hétérocyclyle, dans lequel ledit cycle est facultativement substitué par 1 à 3 R⁸ indépendants ;
chaque n est indépendamment 0 ou 1 ;
p est 0, 1 ou 2 ;
chaque q est indépendamment 0, 1, 2, 3, 4, 5 ou 6 ;
r est 1, 2, 3, 4 ou 5, s est 1, 2, 3, 4 ou 5, et la somme de r+s est inférieure ou égale à 6 ; et
R¹¹ est alkyle en C₁-C₆ ;
à condition que le composé de formule (I) ne soit pas le *N*-[4-chloro-2-(3-pyridyl)-pyrimidin-5-yl]-2,2,2-trifluoroacétamide.

2. Composé de formule (I) selon la revendication 1, dans lequel X¹ est N.

3. Composé de formule (I) selon la revendication 1 dans lequel X¹ est CR¹ et R¹ est halogène ou cyano.

4. Composé de formule (I) selon l'une quelconque des revendications précédentes, dans lequel R² est halogène, cyano, alkyle en C₁-C₆ ou halogénoalkyle en C₁-C₆.

5. Composé de formule (I) selon l'une quelconque des revendications précédentes, dans lequel, dans R³, R⁹ est alkyle en C₁-C₆, halogénoalkyle en C₁-C₃, (alcoxy en C₁-C₃) - (alkyle en C₁-C₃) ou -(CR^{a}R^{b})_{q}R¹⁰.

6. Composé de formule (I) selon la revendication 5, dans lequel R¹⁰ est -C(O)OR^{c}, -OC(O)R^{c}, cyclopropyle, cyclobutyle, cyclopentyle, cyclohexyle, ou un système cyclique choisi parmi phényle, phénoxy, pyridinyle, pyrimidinyle, thiazolyle et thiophényle, dans lequel ledit système cyclique est facultativement substitué par 1 à 3 R⁸ indépendants.

7. Composé de formule (I) selon l'une quelconque des revendications précédentes, dans lequel R⁴ est choisi dans le groupe constitué d'hydrogène, alkyle en C₁-C₄, alcényle en C₃-C₆, (alcoxy en Cᵣ) - (alkyle en Cₛ), (alkylthio en Cᵣ) - (alkyle en Cₛ), alcynyle en C₃-C₆, halogénoalkyle en C₁-C₃, (alcoxy en Cᵣ) - (halogénoalkyle en Cₛ), -C(O)R⁹ et -(CR^{a}R^{b})_{q}R⁵.

8. Composé de formule (I) selon la revendication 7, dans lequel R⁴ est -C(O)R⁹, et ledit R⁹ est alkyle en C₁-C₃, alcényle en C₂-C₄ ou -(CR^{a}R^{b})_{q}R¹⁰.

9. Composé de formule (I) selon la revendication 7, dans lequel R⁴ est -(CR^{a}R^{b})_{q}R⁵, et dans lequel, dans R⁴ :
q est 1, 2 ou 3 ;
R^{a} et R^{b} sont indépendamment hydrogène, méthyle ou éthyle ; et,
R⁵ est -C(O)NR^{a}R^{b}, -NR⁶R⁷, cyano, -(cycloalkyle en C₃-C₆), -aryle ou -hétéroaryle, dans lequel lesdits aryle et hétéroaryle sont facultativement substitués par 1 à 3 R⁸ indépendants.

10. Composé de formule (I) selon l'une quelconque des revendications 1 à 4, dans lequel R⁴ et R⁹, conjointement avec les atomes auxquels ils sont assemblés forment un système cyclique de 5 à 7 chaînons contenant de 1 à 3 hétéroatomes, dans lequel au moins un hétéroatome est N, et un hétéroatome supplémentaire quelconque est indépendamment choisi parmi S, O et N.

11. Composition herbicide comprenant un composé de formule (I) selon l'une quelconque des revendications précédentes et un adjuvant de formulation acceptable en agriculture.

12. Composition herbicide selon la revendication 11, comprenant en outre au moins un pesticide supplémentaire.

13. Composition herbicide selon la revendication 12, dans laquelle le pesticide supplémentaire est un herbicide ou un phytoprotecteur herbicide.

14. Procédé de lutte contre les mauvaises herbes à un site comprenant l'application sur le site d'une quantité contrôlant les mauvaises herbes d'un composé selon l'une quelconque des revendications 1 à 10, ou d'une quantité contrôlant les mauvaises herbes d'une composition selon l'une quelconque des revendications 11 à 14.

15. Utilisation d'un composé de formule (I) tel que défini dans l'une quelconque des revendications 1 à 10 en tant qu'herbicide.
